# EUROPÄISCHE PATENTANMELDUNG

(11) **EP 2 110 397 A1**
(43) Veröffentlichungstag der Anmeldung: **21.10.2009**
(21) Anmeldenummer: 08154634.3
(22) Anmeldetag: 16.04.2008
(51) Int. Cl.: C08G 18/48, C08G 18/75, C08G 18/80, C09J 163/02, C08G 59/40, C08G 18/10, C08G 18/12

(54) **Auf amphiphilen Block-Copolymer basierendes Polyurethan-Polymer und dessen Verwendung als Schlagzähigkeitsmodifikator**

(71) Anmelder: Sika Technology AG, 6340 Baar (CH)
(72) Erfinder: Kramer, Andreas, 8006 Zürich (CH); Finter, Jürgen, 8037, Zürich (CH); Frick, Karsten, 5453, Remetschwil (CH); Schulenburg, Jan Olaf, 8037 Zürich (CH)
(74) Vertreter: Sika Patent Attorneys

(57) **Zusammenfassung**

Die vorliegende Erfindung betrifft neue Schlagzähigkeitsmodifikatoren, welche auf durch Reaktion von amphiphilen Blockcopolymeren erhalten werden. Diese Schlagzähigkeitsmodifikatoren eignen sich insbesondere für den Einsatz in hitzehärtenden Epoxidharzklebstoffen.

## Beschreibung

### Technisches Gebiet

Die Erfindung betrifft das Gebiet der Schlagzähigkeitsmodifikatoren und das Gebiet der hitzehärtenden Epoxidharzzusammensetzungen.

### Stand der Technik

Schlagzähigkeitsmodifikatoren werden schon seit langem dazu eingesetzt, um die Festigkeit von Klebstoffen bei schlagartiger Krafteinwirkung zu verbessern. Insbesondere Epoxidharzzusammensetzungen weisen generell zwar hohe mechanische Festigkeiten auf, sind jedoch sehr spröde, das heisst bei einer schlagartigen Krafteinwirkung, wie sie beispielsweise in einem Zusammenstoss von Fahrzeugen eintritt, bricht das gehärtete Epoxidharz und führt zu einer Zerstörung des Verbundes.
Es wurden schon seit langem Vorschläge gemacht, die Schlagzähigkeit durch Verwendung von Schlagzähigkeitsmodifikatoren zu erhöhen.
Flüssigkautschuke werden schon seit längerem zur Zähigkeitsmodifizierung eingesetzt. Beispielsweise wurden Flüssigkautschuke auf Basis von Acrylnitril/Butadien-Copolymeren, wie sie beispielsweise unter dem Namen Hypro^{™}(früher Hycar®) erhältlich sind, eingesetzt.
EP 0 338 985 A2 beschreibt schlagzähe Epoxidharzzusammensetzungen, welche neben Flüssigkautschuken auf Basis von Acrylnitril/Butadien-Copolymeren zusätzlich auch Flüssigkautschuke auf Basis von Polyurethanprepolymere aufweisen, welche mit einem Phenol oder einem Lactam terminiert sind.
WO 2005/007766 A1 offenbart Epoxidharzzusammensetzungen, welche ein Reaktionsprodukt eines Isocyanatgruppen-terminierten Prepolymers und eines Blockierungsmittels, welches ausgewählt ist aus der Gruppe Bisphenol, Phenol, Benzylalkohol, Aminophenol oder Benzylamin enthalten. Derartige Epoxidharzzusammensetzungen zeigen jedoch Schwächen in der Tieftemperaturschlagzähigkeit (<0°C) auf.
WO 03/093387 A1 offenbart schlagzähe Epoxidharzzusammensetzungen, welche Addukte von Dicarbonsäuren mit Glycidylethern oder von Bis(aminophenyl)sulfon-Isomeren oder aromatischen Alkoholen mit Glycidylethern enthalten. Diese Zusammensetzungen weisen jedoch ebenfalls Defizite in der Tieftemperaturschlagzähigkeit (<0°C) auf.
Vor kurzem wurde z.B. in WO 2006/052725 A1, WO 2006/052726 A1, WO 2006/052727 A1, WO 2006/052728 A1, WO 2006/052729 A1, WO 2006/052730 A1, WO 2005/097893 A1, vorgeschlagen, amphiphile Blockcopolymere für Epoxidharzzusammensetzungen zu verwenden.
Es hat sich aber gezeigt, dass diese Schlagzähigkeitsmodifikatoren zwar wirken, dass aber diese Erhöhung der Schlagzähigkeit, insbesondere der der Tieftemperaturschlagzähigkeit noch ungenügend ist.

### Darstellung der Erfindung

Aufgabe der vorliegenden Erfindung ist es daher, neue Schlagzähigkeitsmodifikatoren zur Verfügung zu stellen, welche eine Verbesserung der Schlagzähigkeit aufweisen, insbesondere bei tiefen Temperaturen.
Überraschenderweise wurde nun gefunden, dass diese Aufgabe durch Schlagzähigkeitsmodifikatoren gemäss Anspruch 1 gelöst werden kann.
Es wurde gefunden, dass sich diese Schlagzähigkeitsmodifikatoren bestens für den Einsatz in hitzehärtenden Epoxidharzklebstoffen eignen. Insbesondere hat sich gezeigt, dass Kombinationen von unterschiedlichen erfindungsgemässen Schlagzähigkeitsmodifikatoren untereinander und/oder mit anderen Schlagzähigkeitsmodifikatoren besonders vorteilhaft sind. Es hat sich gezeigt, dass durch den Einsatz Schlagzähigkeitsmodifikatoren die Glasumwandlungstemperatur (Tg) der ausgehärteten Matrix nicht oder nicht wesentlich negativ beeinflusst werden. Es lassen sich mit Epoxidharzen problemlos Tgs von über 100°C zuweilen gar von über 125°C, erreichen.
Weitere Aspekte der vorliegenden Erfindung sind Gegenstand weiterer unabhängiger Ansprüche. Besonders bevorzugte Ausführungsformen sind Gegenstand der abhängigen Ansprüche.

### Wege zur Ausführung der Erfindung

Die vorliegende Erfindung betrifft in einem ersten Aspekt einen Schlagzähigkeitsmodifikator, welcher ein Isocyanatgruppen aufweisendes Polyurethan-Polymer **PU1** oder ein Umsetzungsprodukt **PU2** dieses Polyurethanproduktes **PU1** mit mindestens einer NCO-reaktiven Verbindung ist. Das Isocyanatgruppen aufweisende Polyurethan-Polymer **PU1** wird hierbei hergestellt aus mindestens einem Polyisocyanat und mindestens einem amphiphilen Blockcopolymer, welches mindestens eine Hydroxylgruppe aufweist, und gegebenenfalls mindestens einer Verbindung mit mindestens zwei NCO-reaktiven Gruppen.

In der gesamten hier vorliegenden Schrift werden mit der Vorsilbe "Poly" in "Polyisocyanat", "Polyol", "Polyphenol" und "Polymercaptan" Moleküle bezeichnet, die formal zwei oder mehr der jeweiligen funktionellen Gruppen enthalten.
Unter einem "Schlagzähigkeitsmodifikator" wird im vorliegenden Dokument ein Zusatz zu einer Kunststoffmatrix, insbesondere einer Epoxidharzmatrix, verstanden, der bereits bei geringen Zuschlägen, insbesondere von 0.1 - 35 Gew.-%, bevorzugt von 0.5 - 15 Gew.-%, eine deutliche Zunahme der Zähigkeit der ausgehärteten Matrix bewirkt und somit in der Lage ist, höhere Biege-, Zug-, Schlag- oder Stossbeanspruchung aufzunehmen, bevor die Matrix einreisst oder bricht.

Als amphiphiles Blockcopolymer wird im vorliegenden Dokument ein Copolymer verstanden, welches mindestens ein Blocksegment, welches mit Epoxidharz mischbar ist, und mindestens ein Blocksegment, welches mit Epoxidharz nicht mischbar ist, enthält. Insbesondere sind amphiphile Blockcopolymere solche, wie sie offenbart werden in WO 2006/052725 A1, WO 2006/052726 A1, WO 2006/052727 A1, WO 2006/052728 A1, WO 2006/052729 A1, WO 2006/052730 A1, WO 2005/097893 A1, deren Inhalt hiermit durch Bezugnahme eingeschlossen wird.

Beispiele für in Epoxidharz mischbare Blocksegmente sind besonders Polyethylenoxid-, Polypropylenoxid-, Poly(ethylenoxid-co-propylenoxid)- und Poly(ethylenoxid-ran-propylenoxid)-Blöcke sowie deren Mischungen.

Beispiele für in Epoxidharz nicht mischbare Blocksegmente sind einerseits insbesondere Polyether-Blöcke hergestellt aus Alkylenoxiden, welche mindestens 4 C-Atome aufweisen, bevorzugt Butylenoxid, Hexylenoxid und/oder Dodecylenoxid. Insbesondere als derartige Polyether-Blöcke bevorzugt sind Polybutylenoxid-, Polyhexylenoxid- und Poly Dodecylenoxid-Blöcke sowie deren Mischungen.
Beispiele für in Epoxidharz nicht mischbare Blocksegmente sind andererseits Polyethylen-, Polyethylenpropylen-, Polybutadien-, Polyisopren-, Polydimethylsiloxan- und Polyalkylmethacrylat-Blöcke sowie deren Mischungen.

In einer Ausführungsform ist das mindestens eine Hydroxylgruppe aufweisende amphiphile Blockcopolymer ein Blockcopolymer aus Ethylenoxid und/oder Propylenoxid sowie mindestens einem weiteren Alkylenoxid mit mindestens 4 C-Atomen, bevorzugt aus der Gruppe bestehend aus Butylenoxid, Hexylenoxid und Dodecylenoxid.

In einer weiteren, bevorzugten, Ausführungsform ist das mindestens eine Hydroxylgruppe aufweisende amphiphile Blockcopolymer ausgewählt aus der Gruppe bestehend aus Poly(isopren-block-ethylenoxid)-Blockcopolymere (PI-b-PEO), Poly(ethylenpropylen-b-ethylenoxid)-Blockcopolymere (PEP-b-PEO), Poly(butadien-b-ethylenoxid)-Blockcopolymere (PB-b-PEO), Poly(isopren-b-ethylenoxid-b-isopren)-Blockcopolymere (PI-b-PEO-PI), Poly(isopren-b-ethylenoxid-methylmethacrylat)-Blockcopolymere (PI-b-PEO-b-PMMA) und Poly(ethylenoxid)-b-poly(ethylen-alt-propylen)-Blockcopolymere (PEO-PEP).

Die amphiphilen Blockcopolymere können insbesondere als Diblock, Triblock oder Tetrablock vorliegen. Bei Multiblocks, d.h. insbesondere bei Tri-oder Tetrablocks, können diese linear oder verzweigt, insbesondere als Sternblock (star block), vorliegen.

Die Herstellung der amphiphilen Blockcopolymere ist dem Fachmann beispielsweise aus Macromolecules 1996, 29, 6994 - 7002 und Macromolecules 2000, 33, 9522-9534 und J. Polym. Sci. Part B: Polym. Phys. 2007, 45, 3338-3348, deren Offenbarung hiermit über Bezugnahme durch Referenz miteingeschlossen wird, bekannt. Das amphiphile Blockcopolymer weist mindestens eine Hydroxylgruppe auf. Je nach Herstellverfahren kann das amphiphile Blockcopolymer eine oder mehrere Hydroxylgruppen aufweisen.
Wird beispielsweise bei der Polymerisierung von Alkylenoxiden mit Methanol gestartet und mit Säure abgebrochen, entsteht ein amphiphiles Blockcopolymer mit einer Hydroxylgruppe.
Wird hingegen mit einem Diol, z.B. Ethylenglycol, gestartet, entsteht ein amphiphiles Blockcopolymer mit zwei Hydroxylgruppen.
Die Herstellung kann beispielsweise in einem sequentiellen Syntheseprozess erfolgen, in welchem zuerst das erste Monomer, z.B. Butylenoxid, unter Mithilfe eines Starters polymerisiert wird, gefolgt von der Zugabe des zweiten Monomers, z.B. Ethylenoxid, welches an das Ende des entstandenen Polymerisat des ersten Monomers anpolymerisiert wird. So kann beispielsweise unter Verwendung von einem Monol als Starter ein amphiphiles Diblockcopolymer Poly(ethylenoxid)-b-Poly(butylenoxid) (PEO-PBO) hergestellt werden. Unter Verwendung eines Diols entsteht so beispielsweise ein amphiphiles Triblockcopolymer Poly(ethylenoxid)-b-Poly(butylenoxid)-Poly(ethylenoxid) (PEO-PBO-PEO).

Zusätzlich zum mindestens einen amphiphilen Blockcopolymer, welches mindestens eine Hydroxylgruppe aufweist, kann noch mindestens eine Verbindung mit mindestens zwei NCO-reaktiven Gruppen eingesetzt werden. Insbesondere stellen Polymere **Q_{PM}** mit endständigen Amino-, Thiol-oder Hydroxylgruppen; und / oder gegebenenfalls substituierte Polyphenole **Q_{PP}** derartige Verbindung mit mindestens zwei NCO-reaktiven Gruppen dar.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6'000, insbesondere von 600 - 4'000, bevorzugt von 700 - 2'200 g/Equivalent NCO-reaktiver Gruppen auf.

Als Polymere **Q_{PM}** geeignet sind Polyole, beispielsweise die folgenden handelsüblichen Polyole oder beliebige Mischungen davon:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten. Besonders geeignet sind Polyoxyalkylendiole oder Polyoxyalkylentriole, insbesondere Polyoxypropylendiole oder Polyoxypropylentriole. Speziell geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol. Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril- oder Acrylnitril-Methylmethacrylat-gepfropfte Polyetherpolyole, insbesondere wie sie beispielsweise von Elastogran unter dem Namen Lupranol® geliefert werden;
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polyhydroxyfunktionelle Fette und Öle, beispielsweise natürliche Fette und Öle, insbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Ethylen-Propylen-, Ethylen-Butylen-oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können.
- Polyhydroxyfunktionelle Acrylonitril/Butadien-Copolymere,wie sie beispielsweise aus Epoxiden oder Aminoalkoholen und carboxylterminierten Acrylonitril/Butadien-Copolymeren (kommerziell unter dem Namen Hypro™(früher Hycar®) CTBN und CTBNX von Nanoresins AG, Deutschland, bzw. Emerald Performance Materials LLC erhältlich) hergestellt werden können.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polymers **Q_{PM}** mitverwendet werden. Ebenso können kleine Mengen an Polyolen mit einer mittleren OH-Funktionalität von mehr als 3 mitverwendet werden, beispielsweise Zuckerpolyole.

Vorteilhaft sind die Polymere **Q_{PM}** di- oder höherfunktioneller Polyole mit OH-Equivalentsgewichten von 300 bis 6000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.
Für gewisse Anwendungen sind als Polymere **Q_{PM}** insbesondere Hydroxyl-Gruppen aufweisende Polybutadiene oder Polyisoprene oder deren partiell oder vollständig hydrierte Reaktionsprodukte geeignet.

Im Weiteren können als Polymere **Q_{PM}** auch di- oder höherfunktionelle aminoterminierte Polyethylenether, Polypropylenether, wie sie zum Beispiel unter dem Namen Jeffamine® von Huntsman vertrieben werden, Polybutylenether, Polybutadiene, Butadien/Acrylnitril-Copolymere, wie sie zum Beispiel die unter dem Namen Hypro^{™}(früher Hycar®) ATBN von Nanoresins AG, Deutschland, bzw. Emerald Performance Materials LLC) vertrieben werden, sowie weitere aminoterminierte synthetische Kautschuke oder Gemische der genannte Komponenten verwendet werden.

Es ist auch möglich, dass als Polymere **Q_{PM}** Hydroxyl-, Mercapto- oder Aminogruppen terminierte Polysiloxane zu verwenden.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.
Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanaten, für die Kettenverlängerung verwendet werden können.
Bei den Polyurethanpolymeren **PU1** generell und bei den kettenverlängerten Polyurethanpolymeren im Speziellen ist vorteilhaft darauf zu achten, dass die Polymere nicht zu hohe Viskositäten aufweisen, insbesondere wenn höher funktionelle Verbindungen für die Kettenverlängerung eingesetzt werden.

Als Polymere **Q_{PM}** bevorzugt sind Polyole mit Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypoly-alkylenglykole mit C₂-C₆-Alkylengruppen oder mit gemischten C₂-C₆- Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.
Durch die Art und Stellung eines solchen Substituenten wird unter anderem die für die Bildung des Polyurethanpolymeren **PU1** nötige Reaktion mit Isocyanaten beeinflusst.
Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methano-indan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol- oder Kresolnovolacke mit -OH-Funktionalität von 2.0 bis 3.5 sowie alle Isomeren der vorgenannten Verbindungen.
Bevorzugte Diphenole und Dikresole hergestellt durch Umsetzung von Phenolen oder Kresolen mit Di-isopropylidenbenzol weisen eine chemische Strukturformel auf, wie sie entsprechend für Kresol als Bespiel nachfolgend gezeigt ist:

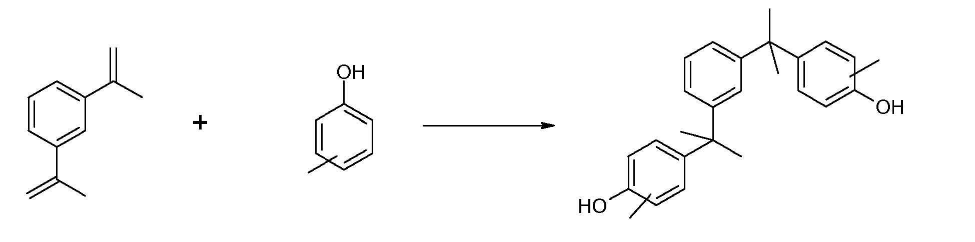

Besonders bevorzugt sind schwerflüchtige Bisphenole. Als meist bevorzugt gelten Bisphenol-M, Bisphenol-S und 2,2'-Diallyl-Bisphenol-A.
Bevorzugt weist das **Q_{PP}** 2 oder 3 phenolische Gruppen auf.

Für die Herstellung des Polyurethan-Polymers **PU1** wird mindestens ein Polyisocyanat verwendet. Dieses hierfür eingesetzte Polyisocyanat ist insbesondere ein Diisocyanat oder Triisocyanat.
Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.
Selbstverständlich können auch geeignete Mischungen von Di- oder Triisocyanaten eingesetzt werden.

Bevorzugt ist das Polyisocyanat HDI, IPDI, MDI oder TDI.

In einer Ausführungsform wird das Polyurethanpolymer **PU1** aus mindestens einem Diisocyanat oder Triisocyanat sowie neben mindestens einem amphiphilen Blockcopolymer, welches mindestens eine Hydroxylgruppe aufweist, aus einem Polymeren **Q_{PM}** mit endständigen Amino-, Thiol- oder Hydroxylgruppen hergestellt. Die Herstellung des Polyurethanpolymers **PU1** erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** und des Hydroxylgruppen aufweisenden amphiphilen Blockcopolymers eingesetzt wird.

In einer weiteren Ausführungsform wird das Polyurethanpolymer **PU1** aus mindestens einem Diisocyanat oder Triisocyanat sowie neben mindestens einem amphiphilen Blockcopolymer, welches mindestens eine Hydroxylgruppe aufweist, aus einem, gegebenenfalls substituierten, Polyphenol **Q_{PP}** hergestellt. Die Herstellung des Polyurethanpolymers **PU1** erfolgt in einer dem Polyurethan-Fachmann bekannter Art und Weise, insbesondere indem das Diisocyanat oder Triisocyanat in einem stöchiometrischen Überschuss in Bezug auf die phenolischen Gruppen des Polyphenols **Q_{PP}** und des Hydroxylgruppen aufweisenden amphiphilen Blockcopolymers eingesetzt wird.

In einer weiteren Ausführungsform wird das Polyurethanpolymer **PU1** aus mindestens einem Diisocyanat oder Triisocyanat sowie neben mindestens einem amphiphilen Blockcopolymer, welches mindestens eine Hydroxylgruppe aufweist, aus einem Polymeren **Q_{PM}** mit endständigen Amino-, Thiol- oder Hydroxylgruppen sowie aus einem, gegebenenfalls substituierten, Polyphenol **Q_{PP}** hergestellt.
Zur Herstellung des Polyurethanpolymers **PU1** aus mindestens einem Polyisocyanat sowie mindestens einem amphiphilen Blockcopolymer, welches mindestens eine Hydroxylgruppe aufweist, und gegebenenfalls aus mindestens einem Polymeren **Q_{PM}** mit endständigen Amino-, Thiol- oder Hydroxylgruppen und / oder mindestens einem, gegebenenfalls substituierten, Polyphenol **Q_{PP}** stehen unterschiedliche Möglichkeiten zur Verfügung.

Je nach Art und Weise der Abfolge und Stöchiometrie zwischen Polyisocyanat und NCO-reaktiven Verbindungen kann die genaue Abfolge der Bausteine im gebildeten Polyurethanpolymers **PU1** gezielt hergestellt werden. Das Polyurethanpolymers **PU1** weist Isocyanatgruppen auf und weist bevorzugt elastischen Charakter auf und zeigt eine Glasumwandlungstemperatur (Tg) von kleiner als 0°C.

Das Polyurethanpolymer **PU1** kann mit mindestens einer NCO-reaktiven Verbindung zu einem Umsetzungsprodukt **PU2** umgesetzt werden.

Es wurde gefunden, dass sowohl Polyurethanpolymer **PU1** als auch dessen Umsetzungsprodukt **PU2** in hervorragender Art und Weise als Schlagzähigkeitsmodifikatoren, insbesondere in Epoxidharzen, verwendet werden können. Es hat sich gezeigt, dass diese Schlagzähigkeitsmodifikatoren gleichmässig in der ausgehärteten Matrix, insbesondere der Epoxidharzmatrix, verteilt auftreten und bereits geringe Mengen genügen, um die Schlagzähigkeit der Matrix sehr stark zu erhöhen. Diese Schlagzähigkeitsmodifikatoren bilden bei der Aushärtung selbständig eine Morphologie aus, welche durch Phasenseparierung von Epoxidharz und Schlagzähigkeitsmodifikator(en) bedingt ist, und je nach verwendetem amphiphilen Copolymer Kugel-, Wurm-oder Bläschen-(Vesikel)-artig ist. Die Grösse dieser separaten Phasen ist insbesondere im Nanometerbereich.

Als NCO-reaktive Verbindung zur Umsetzung zum Umsetzungsprodukt **PU2** sind insbesondere Verbindungen, welche OH, SH, NH, NH₂ als NCO-reaktive Gruppe aufweisen, geeignet.

In einer besonders bevorzugten Ausführungsform weist das Umsetzungsprodukt **PU2** die Formel (I) auf.

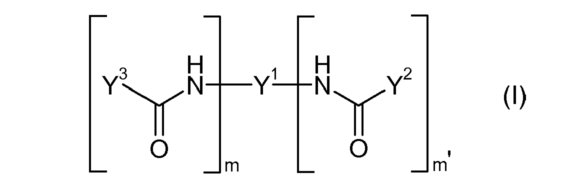

Hierbei steht Y¹ für ein mit m+m' Isocyanatgruppen terminiertes lineares oder verzweigtes Polyurethanpolymer **PU1** nach dem Entfernen aller endständigen Isocyanatgruppen.
Weiterhin steht Y² unabhängig von einander für eine Blockierungsgruppe, welche sich bei einer Temperatur über 100°C abspaltet.
Weiterhin steht Y³ hierbei unabhängig von einander für eine Gruppe der Formel (I').

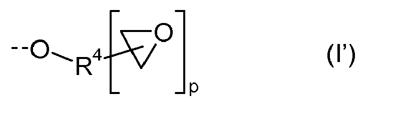

R⁴ steht hierbei für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen.
In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.
Schliesslich ist p = 1, 2 oder 3 und m und m' stehen je für Werte zwischen 0 und 8 stehen, mit der Massgabe, dass m +m' für einen Wert von 1 bis 8 steht.

Die möglichen Blockierungsgruppen Y² sind grundsätzlich sehr vielfältig und der Fachmann kennt eine breite Anzahl derartiger Blockierungsgruppen, zum Beispiel aus den Review Artikeln von Douglas A. Wick in Progress in Organic Coatings 36 (1999), 148-172 und in Progress in Organic Coatings 41 (2001), 1-83.

Als Reste Y² stehen insbesondere Reste, welche ausgewählt sind aus der Gruppe bestehend aus

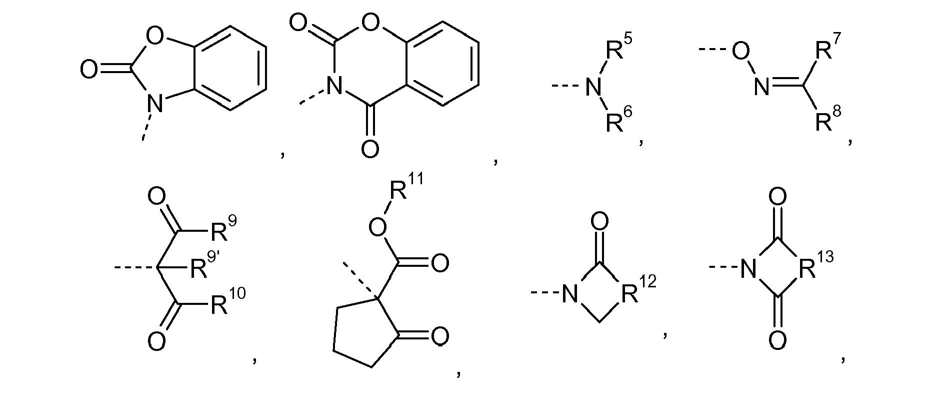

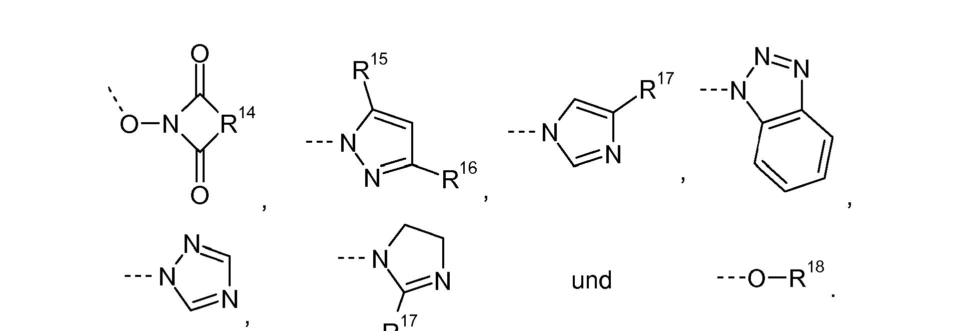

Hierbei stehen R⁵, R⁶, R⁷ und R⁸ entweder je unabhängig voneinander für eine Alkyl- oder Cycloalkyl- oder Aryl- oder Aralkyl- oder Arylalkyl-Gruppe. Oder R⁵ bildet zusammen mit R⁶, oder R⁷ zusammen mit R⁸, einen Teil eines 4- bis 7- gliedrigen Rings, welcher allenfalls substituiert ist.
Weiterhin stehen R⁹, R^{9'} und R¹⁰ je unabhängig voneinander für eine Alkyl- oder Aralkyl- oder Aryl- oder Arylalkyl-Gruppe oder für eine Alkyloxy-oder Aryloxy- oder Aralkyloxy-Gruppe und R¹¹ steht für eine Alkylgruppe.
Des Weiteren stehen R¹², R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe.
R¹⁵, R¹⁶ und R¹⁷ stehen je unabhängig voneinander für H oder für eine Alkylgruppe oder für eine Arylgruppe oder eine Aralkylgruppe und R¹⁸ steht für eine Aralkylgruppe oder für eine ein- oder mehrkernige substituierte oder unsubstituierte Aromatengruppe, welche gegebenenfalls aromatische Hydroxylgruppen aufweist.

Die gestrichelten Linien in den Formeln dieses Dokumentes stellen jeweils die Bindung zwischen dem jeweiligen Substituenten und dem dazugehörigen Molekülrest dar.
Als R¹⁸ sind insbesondere einerseits Phenole oder Bisphenole nach Entfernung einer Hydroxylgruppe zu betrachten. Als Bespiele für derartige Phenole und Bisphenole sind insbesondere Phenol, Cardanol (3-Pentadecenylphenol (aus Cashewnuss-Schalen-Öl)), Nonylphenol, Diallyl-Bisphenol-A, mit Styrol oder Dicyclopentadien umgesetzte Phenole, Bis-Phenol-A, Bis-Phenol-F zu nennen.

Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe. Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.
Die Reste R⁵ und/oder R⁶ stehen insbesondere für Methyl oder Ethyl.
Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Als Y² gilt insbesondere ein Rest, welcher ausgewählt ist aus der Gruppe bestehend aus

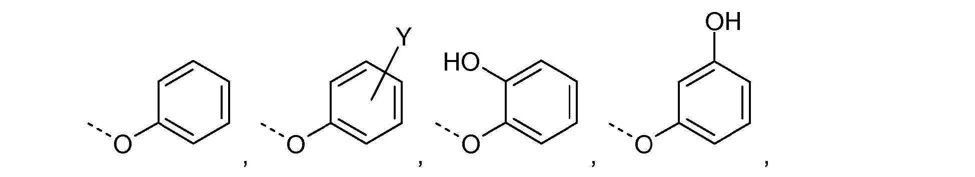

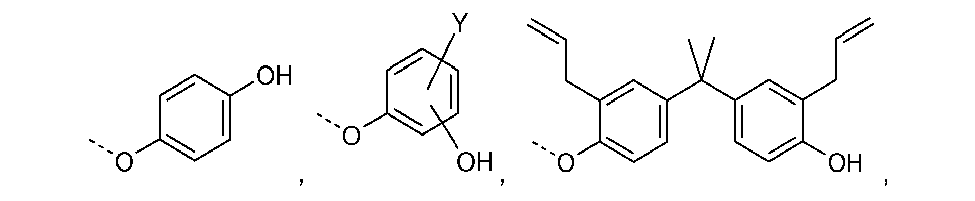

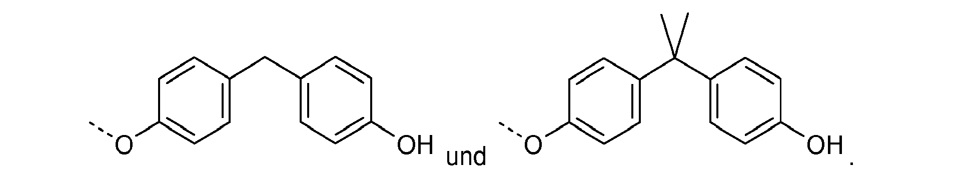

Hierbei steht Y für einen gesättigten oder olefinisch ungesättigten Kohlenwasserstoffrest mit 1 bis 20 C-Atomen, insbesondere mit 1 bis 15 C-Atomen.

Es können im Schlagzähigkeitsmodifikator der Formel (I) unterschiedliche Reste Y² und/oder Y³ vorhanden sein. Wenn unterschiedliche Reste Y² vorhanden sind, ist es vorteilhaft, wenn sich die Deblockierungstemperaturen der Blockierungsgruppen Y² deutlich voneinander unterscheiden. Insbesondere ist es von Vorteil, wenn die Differenz der Deblockierungstemperaturen der beteiligten Y² mindestens 20°C, bevorzugt mindestens 30 °C, beträgt. Dies erlaubt es, gezielt mehrstufige Vernetzungsprozesse zu gestalten, welche eine Vielzahl von Möglichkeiten in Klebstoffen eröffnet.

Zudem ist es vorteilhaft, wenn im Schlagzähigkeitsmodifikator der Formel (I) unterschiedliche Endgruppen vorhanden sind, d.h. insbesondere dass m verschieden von 0 ist, bzw., dass sie aus unterschiedlichen Gruppen, wie sie oben aufgezeigt sind, stammen. Beispielsweise ist es vorteilhaft, einerseits hydroxylfunktionelle Epoxide der Formel (I') und Phenole oder andererseits Phenole und Oxazolinone als Blockierungsmittel zu verwenden. Selbstverständlich sind auch alle weiteren Kombinationen der beschriebenen Blockierungsmittel, sowie ternäre oder quaternäre Mischungen von Blockierungsmitteln, denkbar.

Ein Schlagzähigkeitsmodifikatoren **PU2** der Formel (I) wird aus einem Isocyanatgruppen aufweisenden Schlagzähigkeitsmodifikatoren **PU1** der Formel (III) den NCO-reaktiven Verbindungen Y²-H und/oder Y³-H hergestellt.

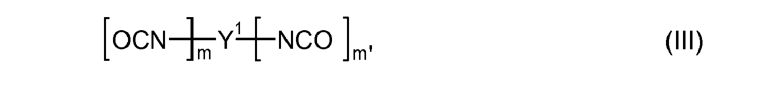

Für die Bildung von sogenannten "asymmetrisch" blockierten Schlagzähigkeitsmodifikatoren der Formel (I), d.h. wenn weder m noch m' einen Wert von 0 aufweisen, bzw. wenn unterschiedliche Reste Y² oder Y³ in demselben Molekül vorhanden sind, lässt sich eine derartige Umsetzung des Isocyanatgruppen aufweisenden Polyurethanpolymers **PU1** entweder mit einer Mischung von unterschiedlichen Y²-H und/oder Y³-H erreichen oder es kann eine sequentielle Umsetzung über ein Zwischenprodukt der Formel (IVa) oder (IVb) erfolgen.

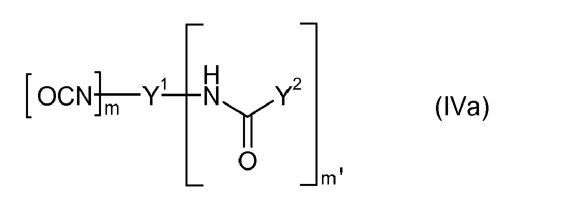

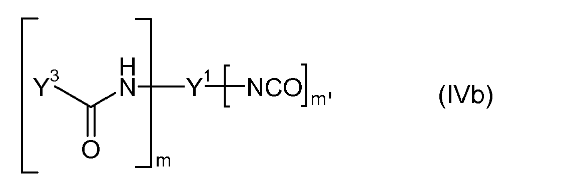

In einem zweiten Schritt wird dann dieses NCO-Gruppen-haltige Zwischenprodukt der Formel (IVa) mit Y³H, beziehungsweise dieses NCO-Gruppen-haltige Zwischenprodukt der Formel (IVb) mit Y²H, zum Umsetzungsprodukt **PU2** der Formel (I) umgesetzt. Diese sequentielle Umsetzung hat den Vorteil, dass die Reaktion besser gesteuert werden kann, so dass die Bildung von symmetrischen Adduktionsprodukten ("gleich" blockiert) reduziert wird. Dies ist insbesondere dann vorteilhaft, wenn die NCO-Reaktivitäten der Verbindungen Y²-H und Y³-H sehr unterschiedlich ist.

Für die Bildung von sogenannten "symmetrisch" blockierten Schlagzähigkeitsmodifikatoren der Formel (I), d.h. wenn m oder m' einen Wert von 0 aufweisen und die beteiligten Reste Y² bzw. Y³ gleich sind, wird die Umsetzung des Isocyanatgruppen aufweisenden Polyurethanpolymers **PU1** mit Y²-H bzw. Y³-H durchgeführt.

In einer bevorzugten Ausführungsform, in der Y³ für die Gruppe der Formel (I') steht, erfolgt die entsprechende Reaktion des Polyurethanpolymers **PU1,** welches die Formel (III) aufweist, mit einer Monohydroxyl-Epoxidverbindung der Formel (V).

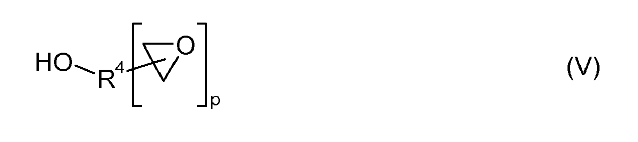

Die Monohydroxyl-Epoxidverbindung der Formel (V) weist 1, 2 oder 3 Epoxidgruppen auf. Die Hydroxylgruppe dieser Monohydroxyl-Epoxidverbindung (V) kann eine primäre oder eine sekundäre Hydroxylgruppe darstellen.
Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether,Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.
Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IX), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IX), die bei der Reaktion von Bisphenol-F (R = H) oder des Gemisches von Bisphenol-A und Bisphenol-F mit Epichlorhydrin gebildet werden.

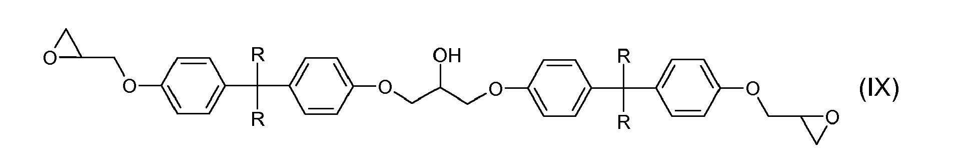

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Die freie primäre oder sekundäre OH-Funktionalität der Monohydroxyl-Epoxidverbindung der Formel (V) lässt eine effiziente Umsetzung mit terminalen Isocyanatgruppen von Prepolymeren zu, ohne dafür unverhältnismässige Überschüsse der Epoxidkomponente einsetzen zu müssen.

Zur Umsetzung der Polyurethanprepolymeren **PU1** der Formel (III) können gesamthaft stöchiometrische Mengen an Y³H, insbesondere der Monohydroxyl-Epoxidverbindung der Formel (V), und Y²H eingesetzt werden. Falls eine sequentielle Umsetzung unter Bildung eines Zwischenproduktes der Formel (IVa) oder (IVb) durchgeführt wird, kann es von Vorteil sein, einen stöchiometrischen Überschuss der im zweiten Schritt verwendeten Verbindung Y³H, bzw. Y²H, einzusetzen, um zu gewährleisten, dass alle NCO Gruppen abreagiert werden.

Sowohl der Schlagzähigkeitsmodifikator, welcher ein Isocyanatgruppen aufweisendes Polyurethan-Polymer **PU1** ist, oder welcher oder ein Umsetzungsprodukt **PU2** dieses Polyurethanproduktes **PU1** mit mindestens einer NCO-reaktiven Verbindung ist, weist vorteilhaft einen elastischen Charakter auf und ist weiterhin vorteilhaft in Epoxid-Flüssigharzen löslich oder dispergierbar.

Ein weiterer Aspekt der vorliegenden Erfindung stellt eine einkomponentige hitzehärtende Epoxidharzzusammensetzung dar, welche
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird; sowie
- mindestens ein vorgängig im Detail beschriebenen Schlagzähigkeitsmodifikator **PU1** oder **PU2** enthält.

Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.
Bevorzugte Epoxid-Festharze weisen die Formel (X) auf

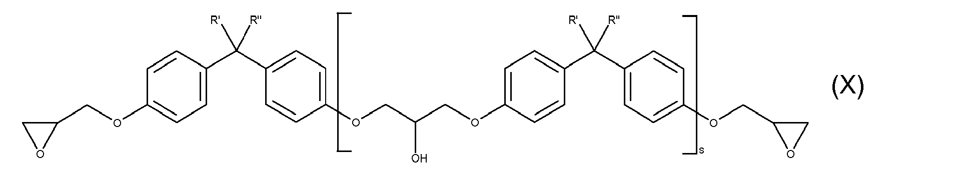

Hierbei stehen die Substituenten R' und R" unabhängig voneinander entweder für H oder CH₃. Weiterhin steht der Index s für einen Wert von > 1.5, insbesondere von 2 bis 12.
Derartige Epoxid-Festharze sind kommerziell erhältlich beispielsweise von Dow oder Huntsman oder Hexion.
Verbindungen der Formel (X) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist. Bevorzugte Epoxid-Flüssigharze weisen die Formel (XI) auf

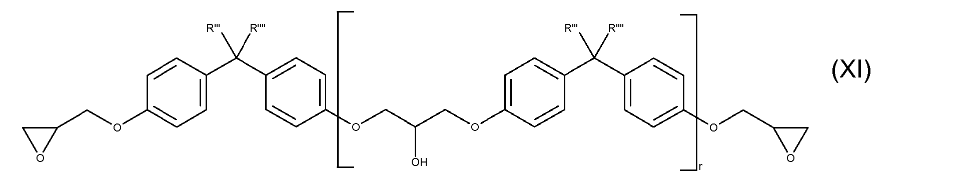

Hierbei stehen die Substituenten R''' und R'''' unabhängig voneinander entweder für H oder CH₃. Weiterhin steht der Index r für einen Wert von 0 bis
1. Bevorzugt steht r für einen Wert von kleiner als 0.2.
   Es handelt sich somit vorzugsweise um Diglycidylether von Bisphenol-A (DGEBA), von Bisphenol-F sowie von Bisphenol-A/F (Die Bezeichnung 'A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.^{™} 331 oder D.E.R.^{™} 330 (Dow) oder Epikote 828 (Hexion) erhältlich.

Weiterhin geeignet als Epoxidharz **A** sind sogenannte Novolake. Diese weisen insbesondere die folgende Formel auf: 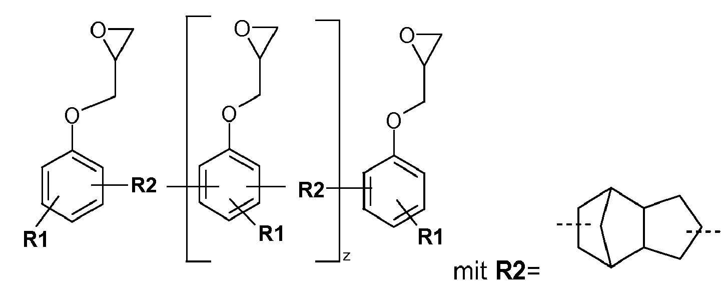 oder CH₂, **R1** = H oder Methyl und z = 0 bis 7.
Insbesondere handelt es sich hierbei um Phenol- oder Kresol-Novolake (**R2** = CH₂).
Solche Epoxidharze sind unter dem Handelnamen EPN oder ECN sowie Tactix®556 von Huntsman oder unter der Produktereihe D.E.N.^{™} VON Dow Chemical kommerziell erhältlich.

Bevorzugt stellt das Epoxidharz **A** ein Epoxid-Flüssigharz der Formel (XI) dar. In einer noch mehr bevorzugten Ausführungsform enthält die hitzehärtende Epoxidharzzusammensetzung sowohl mindestens ein Epoxid-Flüssigharz der Formel (XI) als auch mindestens ein Epoxid-Festharz der Formel (X).

Der Anteil von Epoxidharzes **A** beträgt vorzugsweise 10 - 85 Gew.-%, insbesondere 15 - 70 Gew.-%, bevorzugt 15 - 60 Gew.-%, am Gewicht der Zusammensetzung.

Der Anteil des vorgängig beschriebenen Schlagzähigkeitsmodifikators **PU1** oder **PU2** beträgt vorzugsweise 1 - 45 Gew.-%, insbesondere 3 - 30 Gew.-%, am Gewicht der Zusammensetzung.

Die erfindungsgemässe Zusammensetzung enthält weiterhin mindestens einen Härter **B** für Epoxidharze, welcher durch erhöhte Temperatur aktiviert wird. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden.

Bevorzugt handelt es sich beim Härter **B** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), N,N-Dimethylharnstoff sowie Imidazole, Imidazol-Salze und Amin-Komplexe.

Besonders bevorzugt als Härter **B** ist Dicyandiamid.

Vorteilhaft beträgt der Gesamtanteil des Härters **B**1 - 10 Gewichts-%, vorzugsweise 2 - 8 Gewichts-%, bezogen auf das Gewicht der gesamten Zusammensetzung.

Die hitzehärtende Epoxidharzzusammensetzung kann weiterhin ein Thixotropiermittel **C** auf Basis eines Harnstoffderivates enthalten. Das Harnstoffderivat ist insbesondere ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenyl-methylen-diisocyanat (MDI) mit Butylamin erwiesen.
Das Harnstoffderivat ist vorzugsweise in einem Trägermaterial vorhanden. Das Trägermaterial kann ein Weichmacher, insbesondere ein Phthalat oder ein Adipat sein, vorzugsweise ein Diisodecylphthalat (DIDP) oder Dioctyladipat (DOA). Das Trägermittel kann auch ein nicht-diffundierendes Trägermittel sein. Dies ist bevorzugt, um möglichst eine geringe Migration nach Aushärtung von nicht regierten Bestandteilen zu gewährleisten. Bevorzugt sind als nicht-diffundierende Trägermittel blockierte Polyurethanprepolymere.
Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanprepolymer, insbesondere erhalten durch Umsetzung eines trifunktionellen Polyetherpolyols mit IPDI und anschliessender Blockierung der endständigen Isocyanatgruppen mit ε-Caprolactam.
Vorteilhaft beträgt der Gesamtanteil des Thixotropiermittels **C** 0 - 40 Gewichts-%, vorzugsweise 5 - 25 % Gewichts-%, bezogen auf das Gewicht der gesamten Zusammensetzung. Das Verhältnis vom Gewicht des Harnstoffderivates zum Gewicht des allenfalls vorhandenen Trägermittels beträgt vorzugsweise 2 / 98 bis 50 / 50, insbesondere 5 / 95 - 25 /75.

Es hat sich weiterhin gezeigt, dass es besonders vorteilhaft ist, wenn die hitzehärtende einkomponentige Epoxidharzzusammensetzung neben dem vorgängig beschriebenen Schlagzähigkeitsmodifikators **PU1** oder **PU2** zusätzlich mindestens noch einen weiteren Schlagzähigkeitsmodifikator **D** enthält.

Die zusätzlichen Schlagzähigkeitsmodifikatoren **D** können fest oder flüssig sein.

In einer Ausführungsform ist dieser Schlagzähigkeitsmodifikatoren **D** ein Flüssigkautschuk **D1,** welcher ein carboxyl- oder epoxidterminiertes Acrylnitril/Butadien-Copolymer oder ein Derivat davon ist. Derartige Flüssigkautschuke sind beispielsweise unter dem unter dem Namen Hypro^{™}(früher Hycar®) CTBN und CTBNX und ETBN von Nanoresins AG, Deutschland, bzw. Emerald Performance Materials LLC) kommerziell erhältlich. Als Derivate sind insbesondere Epoxidgruppen aufweisende Elastomer-modifizierte Prepolymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden, geeignet.

In einer weiteren Ausführungsform ist der Schlagzähigkeitsmodifikator **D** ein Polyacrylatflüssigkautschuk **D2,** der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.
Es ist dem Fachmann klar, dass natürlich auch Mischungen von Flüssigkautschuken verwendet werden können, insbesondere Mischungen von carboxyl- oder epoxidterminiertes Acrylnitril/Butadien-Copolymeren oder Derivaten davon mit epoxidterminierten Polyurethanprepolymeren.

In einer weiteren Ausführungsform ist der Schlagzähigkeitsmodifikator **D** ein fester Schlagzähigkeitsmodifikator, welcher ein organisches lonengetauschtes Schichtmineral **DE1** ist.

Das Ionen-getauschte Schichtmineral **DE1** kann entweder ein Kationen-getauschtes Schichtmineral **DE1c** oder ein Anionen-getauschtes Schichtmineral **DE1a** sein.
Das Kationen-getauschte Schichtmineral **DE1c** wird hierbei erhalten aus einem Schichtmineral **DE1',** bei welchem zumindest ein Teil der Kationen durch organische Kationen ausgetauscht worden sind. Beispiele für derartige Kationen-getauschte Schichtmineralien **DE1c** sind insbesondere diejenigen, welche in US 5,707,439 oder in US 6,197,849 erwähnt sind. Ebenso ist dort das Verfahren zur Herstellung dieser Kationen-getauschten Schichtminerale **DE1c** beschrieben. Bevorzugt als Schichtmineral **DE1'** ist ein Schichtsilikat. Insbesondere bevorzugt handelt es sich beim Schichtmineral **DE1'** um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich Schichtmineral **DE1'** wie Kaolinit oder ein Montmorillionit oder ein Hectorit oder ein Illit gezeigt.
Zumindest ein Teil der Kationen des Schichtminerals **DE1'** wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidinium Kationen oder Amidiniumkationen; oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azobicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann.
Bevorzugte Kationen-getauschte Schichtminerale **DE1c** sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) oder Garmite® (Rockwood) erhältlich.

Das Anionen-getauschte Schichtmineral **DE1a** wird hierbei erhalten aus einem Schichtmineral **DE1",** bei welchem zumindest ein Teil der Anionen durch organische Anionen ausgetauscht worden sind. Ein Beispiel für ein derartig Anionen-getauschtes Schichtmineral **DE1a** ist ein Hydrotalcit **DE1",** bei dem zumindest ein Teil der Carbonat-Anionen der Zwischenschichten durch organische Anionen ausgetauscht wurden.
Es ist durchaus auch möglich, dass die Zusammensetzung gleichzeitig ein Kationen-getauschtes Schichtmineral **DE1c** und ein Anionen-getauschtes Schichtmineral **DE1a** enthält.

In einer weiteren Ausführungsform ist der Schlagzähigkeitsmodifikator **D** ein fester Schlagzähigkeitsmodifikator, welcher ein Blockcopolymer **DE2** ist. Das Blockcopolymer **DE2** wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.
Besonders bevorzugte Blockcopolymere **DE2** sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

In einer weiteren Ausführungsform ist der Schlagzähigkeitsmodifikator **D** ein Core-Shell Polymer **DE3.** Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensionspolymerisation mit nachfolgender Pfropfung vorgegeben. Bevorzugte Core-Shell-Polymere sind sogenannte MBS Polymere, welche kommerziell unter dem Handelsnamen Clearstrength^{™} von Atofina, Paraloid^{™} von Rohm and Haas oder F-351^{™} von Zeon erhältlich sind.
Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas.
Weitere vergleichbare Beispiele für Core-Shell-Polymere werden unter dem Namen Albidur^{™} von Nanoresins AG, Deutschland, angeboten.
Ebenso geeignet sind nanosklaige Silikate in Epoxid-Matiix, wie sie unter dem Handelnamen Nonopox von Nanoresins AG, Deutschland, angeboten werden.
In einer weiteren Ausführungsform ist der Schlagzähigkeitsmodifikator **D** ein Umsetzungsprodukt **DE4** eines carboxylierten festen Nitrilkautschuks mit überschüssigem Epoxidharz.
Besonders geeignet als in der Zusammensetzung gegebenenfalls vorhandenem Schlagzähigkeitsmodifikator **D** sind Schlagzähigkeitsmodifikatoren, welche dem bereits beschriebenen Schlagzähigkeitsmodifikator der Formel (I), entsprechen, welche aber nicht auf einem Hydroxylgruppe(n) aufweisenden amphiphilen Blockcopolymer, sondern auf einem Polymeren **Q_{PM}** mit endständigen Amino-, Thiol- oder Hydroxylgruppen sowie aus einem, gegebenenfalls substituierten, Polyphenol **Q_{PP},** wie sie für die Herstellung des Polyurethan-Polymer **(PU1)** bereits offenbart wurden, basieren.
Besonders geeignet als in der Zusammensetzung gegebenenfalls vorhandenem Schlagzähigkeitsmodifikator **D** sind jene, wie sie in den folgenden Artikel bzw. Patentschriften, deren Inhalt hiermit durch Referenz miteingeschlossen wird, offenbart sind: EP 0 308 664 A1, insbesondere Formel (I), besonders Seite 5, Zeile 14 bis Seite 13, Zeile 24; EP 0 338 985 A1, EP 0 353 190 A1, WO 00/20483 A1, insbesondere Formel (I), besonders Seite 8, Zeile 18 bis Seite 12, Zeile 2; WO 01/94492 A1, insbesondere die als D) und E) bezeichneten Reaktionsprodukte, besonders Seite 10, Zeile 15 bis Seite 14, Zeile 22; WO 03/078163 A1, insbesondere das als B) bezeichnete Acrylatterminierte Polyurethanharz, besonders Seite 14, Zeile 6 bis Seite 14, Zeile 35; WO 2005/007766 A1, insbesondere Formel (I) oder (II), besonders Seite 4, Zeile 5 bis Seite 11 bis Zeile 20; EP 1 728 825 A1, insbesondere Formel (I), besonders Seite 3, Zeile 21 bis Seite 4 bis Zeile 47; WO 2006/052726 A1, insbesondere das als b) bezeichnete amphiphilic block copolymer, besonders Seite 6, Zeile 17 bis Seite 9, Zeile 10; WO 2006/052729 A1, insbesondere das als b) bezeichnete amphiphilic block copolymer, besonders Seite 6, Zeile 25 bis Seite 10, Zeile 2; T.J. Hermel-Davidock et al., J.Polym. Sci. Part B: Polym. Phys. 2007, 45, 3338-3348, insbesondere die ambiphilen Blockcopolymere, besonders Seite 3339, 2. Spalte bis 3341 2.Spalte; WO 2004/055092 A1, insbesondere Formel (I), besonders Seite 7, Zeile 28 bis Seite 13 bis Zeile 15;. WO 2005/007720 A1, insbesondere Formel (I), besonders Seite 8, Zeile 1 bis Seite 17 bis Zeile 10; WO 2007/020266 A1, insbesondere Formel (I), besonders Seite 3, Zeile 1 bis Seite 11 bis Zeile 6, sowie DE-A-2 123 033, US 2008/0076886 A1, WO 2008/016889 und WO 2007/025007.

Es hat sich gezeigt, dass in der Zusammensetzung vorteilhaft mehrere Schlagzähigkeitsmodifikator vorhanden sind, insbesondere auch mehrere Schlagzähigkeitsmodifikatoren **D.**

Der Anteil an Schlagzähigkeitsmodifikatoren **D** wird vorteilhaft in einer Menge von 1 - 35 Gew.-%, insbesondere 1 - 25 Gew.-%, bezogen auf das Gewicht der Zusammensetzung, eingesetzt.

In einer weiteren bevorzugten Ausführungsform enthält die Zusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.
Ein weiteres Beispiel sind funktionalisierte Alumoxane wie z. B. in US 6,322,890 beschrieben.
Vorteilhaft beträgt der Gesamtanteil des gesamten Füllstoffs **F** 3 - 50 Gewichts-%, vorzugsweise 5 - 35 Gewichts-%, insbesondere 5 - 25 Gewichts-%, bezogen auf das Gewicht der gesamten Zusammensetzung.

In einer weiteren bevorzugten Ausführungsform enthält die Zusammensetzung ein physikalisches oder chemisches Treibmittel, wie es beispielsweise unter dem Handelsnamen Expancel^{™} der Firma Akzo Nobel oder Celogen^{™} der Firma Chemtura erhältlich ist.Der Anteil des Treibmittels beträgt vorteilhaft 0.1 - 3 Gew.-%, bezogen auf das Gewicht der Zusammensetzung.
In einer weiteren bevorzugten Ausführungsform enthält die Zusammensetzung zusätzlich mindestens einen Epoxidgruppen-tragenden Reaktivverdünner **G.** Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂ - C₃₀ - Alkolen, insbesondere ausgewählt aus der Gruppe bestehend aus Ethylenglykol-, Butandiol-, Hexandiol-, Oktandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen insbesondere ausgewählt aus der Gruppe bestehend aus Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin und Triglycdiyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäure-glycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycol-diglycidylether oder Polypropyleneglycol-diglycidylether.

Besonders bevorzugt sind Hexandioldiglycidylether, Kresylglycidylether, p-*tert.*-Butylphenylglycidylether, Polypropylenglycoldiglycidylether und Polyethylenglycoldiglycidylether.
Vorteilhaft beträgt der Gesamtanteil des epoxidgruppentragenden Reaktivverdünners **G** 0.1 - 20 Gewichts-%, vorzugsweise 1 - 8 Gewichts-%, bezogen auf das Gewicht der gesamten Zusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie BHT oder Wingstay® T (Elikem), sterisch gehinderte Amine oder N-Oxylverbindungen wie TEMPO (Evonik).
Es hat sich gezeigt, dass sich die beschriebenen hitzehärtenden Epoxidharzzusammensetzungen besonders als einkomponentige Klebstoffe eignen. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit, sowohl bei höheren Temperaturen und vor allem bei tiefen Temperaturen, insbesondere zwischen 0°C bis -40°C auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.
Mit einem Klebstoff basierend auf einer erfindungsgemässen hitzehärtenden Zusammensetzung ist es möglich, die gewünschte Kombination von hoher Crashfestigkeit sowohl hoher als auch tiefer Einsatztemperatur zu erreichen.
Ein solcher Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C.

Ein weiterer Aspekt der vorliegenden Erfindung betrifft ein Verfahren zur Verklebung von hitzestabilen Substraten, welches die Schritte umfasst:
i) Applizieren einer einkomponentigen hitzehärtenden Epoxidharzzusammensetzung, wie sie vorgängig im Detail beschrieben wurde, auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen des Epoxidharzzusammensetzung auf eine Temperatur von 100 bis 130 °C, bevorzugt von 115 bis 125°C;
iv) In Kontaktbringen der Substrate **S1** und **S2** und der damit in Kontakt stehenden hitzehärtenden Epoxidharzzusammensetzung mit einer Waschflüssigkeit bei einer Temperatur zwischen 20 und 100°C, insbesondere zwischen 40 und 70°C; bevorzugt zwischen 50 und 70°C
v) Erhitzen der Zusammensetzung auf eine Temperatur von 140 - 220 °C, insbesondere von 140 - 200°C, bevorzugt zwischen 160 und 190°C.
Das Substrat **S2** besteht hierbei aus dem gleichen oder einem unterschiedlichen Material wie das Substrat **S1.**

Aus einem derartigen Verfahren zum Verkleben von hitzestabilen Materialien resultiert ein verklebter Artikel. Ein derartiger Artikel ist vorzugsweise ein Fahrzeug oder ein Anbauteil eines Fahrzeugs.
Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.
Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.
Es lassen sich Zusammensetzungen formulieren, welche typischerweise Bruchenergien, gemessen nach ISO 11343, von mehr als 5.0 J bei 23°C und mehr als 2.0 J bei -30°C aufweisen. Typischerweise lassen sich Zusammensetzungen formulieren, welche Bruchenergien von mehr als 8.0 J bei 23°C und von mehr als 4.0 J bei -30°C aufweisen. Besonders vorteilhafte Zusammensetzungen weisen gar Bruchenergien von mehr als 10.0 J bei 23°C und von mehr als 9.0 J bei -30°C auf.
Eine besonders bevorzugte Verwendung der erfindungsgemässen hitzehärtenden Epoxidharzzusammensetzung ist dessen Verwendung als hitzehärtender Rohbauklebstoff im Fahrzeugbau.
Ein weiterer Aspekt der vorliegenden Erfindung betrifft Verwendung eines mindestens eine Hydroxylgruppe aufweisenden amphiphilen Blockcopolymeren, zum Herstellen von Urethangruppen aufweisenden Schlagzähigkeitsmodifikatoren. Die mindestens eine Hydroxylgruppe aufweisenden amphiphilen Blockcopolymeren sowie deren Verwendung zum Herstellen von Urethangruppen aufweisenden Schlagzähigkeitsmodifikatoren wurden bereits vorgängig im Detail beschrieben worden.

### Beispiele

Im Folgenden sollen einige Beispiele aufgezeigt werden, welche die Erfindung weiter veranschaulichen, den Umfang der Erfindung aber in keiner Weise beschränken sollen. Die in den Beispielen verwendeten Rohstoffe sind in Tabelle 1 aufgelistet.

**Tabelle1. Eingesetzte Rohstoffe.**

| **Verwendete Rohstoffe** | **Lieferant** |
|---|---|
| Fortegra^{™} 100 (Hydroxylgruppen aufweisendes amphiphiles Blockcopolymer) | Dow Chemical |
| Isophoron-diisocyanat (=IPDI) | Degussa-Hüls |
| Hydrochinon-monomethylether | Sigma-Aldrich |
| Poly-THF® 2000 | BASF |
| Poly-THF® 1800 | BASF |
| Liquiflex H | Krahn |
| Benzoxazolinon | Sigma-Aldrich |
| Cardolite® NC-700 (Cardanol) | Cardolite |
| D.E.R.^{™} 331 (Bisphenol-A-Diglycidylether) | Dow |
| Polypox R7 (t-Butylphenyl-glycidylether) | UPPC |
| Dyhard ® 100SF Dicyandiamid (="*dicy*") | Alzchem |
| Acclaim® 8200 N | Bayer Material Science |
| Hypro^{™} CTBN 1300X13 | Nanoresins |
| D.E.R. 671 (Festharz) (EP-Equivalentgewicht 475-550g/eq) | Dow |
| Jeffamine® T-3000 | Huntsman |
| Jeffamine® D-4000 | Huntsman |
| Jeffamine® T-403 | Huntsman |
| N,N-Dimethylharnstoff | Sigma-Aldrich |
| Desmophen® 3060 BS (Trifunktionelles Polypropylenglykol) (OH-Equivalentgewicht = 1000 g/OH-Equivalent) | Bayer Material Science |
| Caradol ED 56-10 | Shell |
| Dynacoll ® 7250 | Evonik |
| 4,4'-Diphenyl-methylen-diisocyanat (=MDI) | Bayer |
| N-Butylamin | BASF |
| ε-Caprolactam | EMS Chemie |

### Beispielhafte Herstellung eines monohydroxylhaltigen Epoxides MHE1

Trimethylolpropanglycidylether wurde gemäss dem Verfahren in Patent US 5,668,227, Beispiel 1 aus Trimethylolpropan und Epichlorhydrin mit Tetramethylammoniumchlorid und Natronlauge hergestellt. Man erhält ein gelbliches Produkt mit Epoxidzahl von 7.5 eq/kg und einem Hydroxylgruppengehalt von 1.8 eq/kg. Aus dem HPLC-MS Spektrum kann geschlossen werden, dass im Wesentlichen ein Gemisch von Trimethylolpropandiglycidylether und Trimethylolpropantriglycidylether vorliegt.

### Thixotropiermittel TM1

Als Beispiel für ein Thixotropiermittel auf Basis eines Harnstoffderivates in einem nicht-diffundierenden Trägermaterial wurde ein Thixotropiermittel gemäss Patentanmeldung EP 1 152 019 A1 in einem blockierten Polyurethan-Prepolymer mit oben erwähnten Rohstoffen hergestellt:

### Trägermittel: Blockiertes Polyurethan-Prepolymer PUP:

600.0 g eines Polyetherpolyols (Desmophen 3060BS; 3000 Dalton; OH-Zahl 57 mg/g KOH) wurden unter Vakuum und Rühren bei 90°C mit 140.0 g IPDI und 0.10g Dibutylzinndilaurat zum Isocyanat-terminierten Prepolymer umgesetzt. Die Reaktion wurde bis zur Konstanz des NCO-Gehaltes bei 3.41 % nach 2.5h geführt (theoretischer NCO-Gehalt:3.60%).Anschliessend wurden die freien Isocyanatgruppen bei 90°C unter Vakuum mit 69.2g Caprolactam (2% Überschuss) blockiert, wobei ein NCO-Gehalt von < 0.1 % nach 3h erreicht wurde.

### Harnstoffderivat in blockiertem Polyurethan-Prepolymer:

Unter Stickstoff und leichtem Wärmen wurden 68.7 g MDI-Flocken in 181.3 g des oben beschriebenen blockierten Prepolymeres ***PUP*** eingeschmolzen. Danach wurden während zwei Stunden unter Stickstoff und schnellem Rühren 40.1 g N-Butylamin gelöst in 219.9 g des oben beschriebenen blockierten Prepolymers zugetropft. Nach Beendigung der Zugabe der Aminlösung wurde die weisse Paste für weitere 30 Minuten weitergerührt. So wurde nach dem Abkühlen eine weisse, weiche Paste eines Thixotropiermittels ***TM1*** erhalten, welche einen freien Isocyanatgehalt von < 0.1 % aufwies (Anteil Harnstoffderivat ca. 20%).

### Herstellung Schlagzähigkeitsmodifikator PU2-1

100 g Fortegra^{™} 100 (OH-Zahl ca. 16 mg/g KOH) wurden 30 Minuten unter Vakuum bei 105°C getrocknet. Nachdem die Temperatur auf 90°C reduziert worden war, wurden 7.2 g IPDI und 0.04 g Dibutylzinndilaurat zugegeben. Die Reaktion wurde unter Vakuum bei 90°C bis zur Konstanz des NCO-Gehaltes bei 1.17% nach 2.5 h geführt (berechneter NCO-Gehalt: 1.29%). Anschliessend wurden 4.4 g Hydrochinon-monomethylether als Blockierungsmittel zugegeben. Es wurde bei 115°C unter Vakuum weitergerührt, bis der NCO-Gehalt nach 3.5h unter 0.1 % gesunken war.

### Herstellung Schlagzähigkeitsmodifikator PU2-2

100 g Fortegra^{™} 100 (OH-Zahl ca. 16 mg/g KOH) wurden 30 Minuten unter Vakuum bei 105°C getrocknet. Nachdem die Temperatur auf 90°C reduziert worden war, wurden 7.2 g IPDI und 0.04 g Dibutylzinndilaurat zugegeben. Die Reaktion wurde unter Vakuum bei 90°C bis zur Konstanz des NCO-Gehaltes bei 1.17% nach 2.5 h geführt (berechneter NCO-Gehalt: 1.29%). Anschliessend wurden 20.7 g ***MHE1*** (Gemisch aus Trimethylolpropan-tri- und Trimethylolpropandiglycidylether) als Blockierungsmittel zugegeben. Es wurde bei 100°C unter Vakuum weitergerührt, bis der NCO-Gehalt nach 2.5h unter 0.1 % gesunken war.

### Herstellung Schlagzähigkeitsmodifikator PU2-3

40 g Poly-THF 2000 (OH-Zahl ca. 57 mg/g KOH), 40 g Fortegra^{™} 100 (OH-Zahl ca. 16 mg/g KOH) und 40 g Liquiflex H (OH-Zahl 46 mg/g KOH) wurden 30 Minuten unter Vakuum bei 105°C getrocknet. Nachdem die Temperatur auf 90°C reduziert worden war, wurden 19.2 g IPDI und 0.06 g Dibutylzinndilaurat zugegeben. Die Reaktion wurde unter Vakuum bei 90°C bis zur Konstanz des NCO-Gehaltes bei 2.4% nach 2.5 h geführt (berechneter NCO-Gehalt: 2.6%). Anschliessend wurden 3.2 g Benzoxazolinon und 3.0 g Hydrochinon-monomethylether zugegeben. Nach 3 h Rühren bei 120°C unter Vakuum wurden 26.5 g ***MHE1*** (Gemisch aus Trimethylolpropan-tri- und Trimethylolpropandiglycidylether) zugegeben. Es wurde bei 100°C unter Vakuum weitergerührt, bis der NCO-Gehalt nach 2.5h unter 0.1 % gesunken war.

### Herstellung Schlagzähigkeitsmodifikator PU-Ref1

150 g Acclaim 8200N (OH-Zahl ca. 14.5 mg/g KOH) wurden 30 Minuten unter Vakuum bei 105°C getrocknet. Nachdem die Temperatur auf 90°C reduziert worden war, wurden 9.9 g IPDI und 0.05 g Dibutylzinndilaurat zugegeben. Die Reaktion wurde unter Vakuum bei 90°C bis zur Konstanz des NCO-Gehaltes bei 1.18% nach 2.5 h geführt (berechneter NCO-Gehalt: 1.20%). Anschliessend wurden 6.7 g Hydrochinon-monomethylether als Blockierungsmittel zugegeben. Es wurde bei 115°C unter Vakuum weitergerührt, bis der NCO-Gehalt nach 3.5h unter 0.1 % gesunken war.

### Herstellung Schlagzähigkeitsmodifikator PU-Ref2

150 g Acclaim 8200N (OH-Zahl ca. 14.5 mg/g KOH) wurden 30 Minuten unter Vakuum bei 105°C getrocknet. Nachdem die Temperatur auf 90°C reduziert worden war, wurden 9.9 g IPDI und 0.05 g Dibutylzinndilaurat zugegeben. Die Reaktion wurde unter Vakuum bei 90°C bis zur Konstanz des NCO-Gehaltes bei 1.18% nach 2.5 h geführt (berechneter NCO-Gehalt: 1.20%). Anschliessend wurden 31.2 g ***MHE1*** (Gemisch aus Trimethylolpropan-tri- und Trimethylolpropandiglycidylether) als Blockierungsmittel zugegeben. Es wurde bei 100°C unter Vakuum weitergerührt, bis der NCO-Gehalt nach 2.5h unter 0.1 % gesunken war.

### Herstellung Schlagzähigkeitsmodifikator PU-Ref3

150 g Poly-THF 2000 (OH-Zahl 57 mg/g KOH) und 150 Liquiflex H (OH-Zahl 46 mg/g KOH) wurden 30 Minuten unter Vakuum bei 105°C getrocknet. Nachdem die Temperatur auf 90°C reduziert worden war, wurden 64.0 g IPDI und 0.13 g Dibutylzinndilaurat zugegeben. Die Reaktion wurde unter Vakuum bei 90°C bis zur Konstanz des NCO-Gehaltes bei 3.30% nach 2.5 h geführt (berechneter NCO-Gehalt: 3.38%). Anschliessend wurden 103.0 g Cardolite NC-700 als Blockierungsmittel zugegeben. Es wurde bei 105°C unter Vakuum weitergerührt, bis der NCO-Gehalt nach 3.5h unter 0.1% gesunken war.

### Herstellung Schlagzähigkeitsmodifikator PU-Ref4

60 g Poly-THF 2000 (OH-Zahl ca. 57 mg/g KOH) und 60 g Liquiflex H (OH-Zahl 46 mg/g KOH) wurden 30 Minuten unter Vakuum bei 105°C getrocknet. Nachdem die Temperatur auf 90°C reduziert worden war, wurden 24.6 g IPDI und 0.06 g Dibutylzinndilaurat zugegeben. Die Reaktion wurde unter Vakuum bei 90°C bis zur Konstanz des NCO-Gehaltes bei 3.05% nach 2.5 h geführt (berechneter NCO-Gehalt: 3.22%). Anschliessend wurden 4.3 g Benzoxazolinon und 3.9 g Hydrochinon-monomethylether zugegeben. Nach 3 h Rühren bei 120°C unter Vakuum wurden 35.0 g ***MHE1*** (Gemisch aus Trimethylolpropan-tri- und Trimethylolpropandiglycidylether) zugegeben. Es wurde bei 100°C unter Vakuum weitergerührt, bis der NCO-Gehalt nach 2.5h unter 0.1 % gesunken war.

### Herstellung Schlagzähigkeitsmodifikator PU-Ref5

108 g Poly-THF 2000 (OH-Zahl ca. 57.0 mg/g KOH) und 72 g Dynacoll 7250 (OH-Zahl 22 mg/g KOH) wurden 30 Minuten unter Vakuum bei 105°C getrocknet. Nachdem die Temperatur auf 90°C reduziert worden war, wurden 32.2 g IPDI und 0.06 g Dibutylzinndilaurat zugegeben. Die Reaktion wurde unter Vakuum bei 90°C bis zur Konstanz des NCO-Gehaltes bei 2.87% nach 2.5 h geführt (berechneter NCO-Gehalt: 2.92%). Anschliessend wurden 21.6 g Hydrochinon-monomethylether zugegeben. Es wurde bei 110°C unter Vakuum weitergerührt, bis der NCO-Gehalt nach 3.5h unter 0.1 % gesunken war.

### Herstellung Schlagzähigkeitsmodifikator SM1

90 g Hypro^{™} CTBN 1300X13 (Säure-Zahl ca. 29 mg/g KOH), 60 g Hypro^{™} CTBN 1300X8 (Säure-Zahl ca. 32 mg/g KOH) und 23.2 g Araldite® GT7071 (EEW ca. 510 g/eq) wurden zusammen mit 0.75 g Triphenylphosphin und 0.38 g BHT während 2 Stunden unter Vakuum bei 140°C gerührt. Anschliessend wurden 201.8 g D.E.R. 354 zugegeben und es wurde während 2h bei 140°C unter Vakuum weiter gerührt. Es wurde ein viskoses Harz mit einem Epoxidgehalt von ca. 2.8 eq/kg erhalten.

### Herstellung Schlagzähigkeitsmodifikator SM2

318.0 g Jeffamine T-3000 und 30.4 g Maleinsäureanhydrid wurden während 2 h unter Stickstoff bei 120°C gerührt. Anschliessend wurden 802 g D.E.R. 331 sowie 2.9 g Triphenylphosphin zugegeben und es wurde bei 110°C unter Vakuum weiter gerührt, bis ein konstanter Epoxid-Gehalt erreicht war. Nach ca. 2h wurde so ein viskoses Harz mit einem Epoxid-Gehalt von ca. 3.5 eq/kg erhalten.

### Herstellung Schlagzähigkeitsmodifikator SM3

200.0 g (ca. 0.4 eq EP) D.E.R. 671 und 75.0 g (ca. 0.4 eq EP) D.E.R. 331 wurden während 15 Minuten bei 120°C unter Vakuum gerührt, bis eine homogene Lösung entstanden war. Anschliessend wurden 230.0 g (ca 0.23 eq NH) Jeffamine D-4000 sowie 0.5 g (ca. 0.007 eq NH) Jeffamine T-403 zugegeben. Nach 3h Rühren unter Vakuum bei 120°C sowie 1h bei 130°C wurde ein klares, viskoses Harz mit einem berechneten Epoxid-Gehalt von ca. 1.13 eq/kg (EEW = ca. 890) erhalten.

### Herstellung Schlagzähigkeitsmodifikator SM4

160 g Poly-THF 1800 (OH-Zahl 62.3 mg/g KOH), 110 g Liquiflex H (OH-Zahl 46 mg/g KOH) und 130 g Caradol ED 56-10 (OH-Zahl 56 mg/g KOH) wurden 30 Minuten unter Vakuum bei 105°C getrocknet. Nachdem die Temperatur auf 90°C reduziert worden war, wurden 92.5 g IPDI und 0.08 g Dibutylzinndilaurat zugegeben. Die Reaktion wurde unter Vakuum bei 90°C bis zur Konstanz des NCO-Gehaltes bei 3.60% nach 2.5 h geführt (berechneter NCO-Gehalt: 3.62%). Anschliessend wurden 257.8 g ***MHE1*** (Gemisch aus Trimethylolpropan-tri- und Trimethylolpropandiglycidylether) zugegeben und die Reaktion wurde bei 90°C unter Vakuum weitergeführt, bis der NCO-Gehalt nach 3h unter 0.1 % gefallen war.

### Herstellung Schlagzähigkeitsmodifikator SM5

Bei 110°C wurden unter Vakuum und Rühren 123.9 g einer dimeren Fettsäure sowie 71.3 g 2,2-Bis(4-hydroxyphenyl)sulfon (Clariant) mit 658 g eines flüssigen DGEBA-Epoxidharzes mit einem Epoxidgehalt von 5.45 eq/kg 5 Stunden lang umgesetzt, bis eine konstante Epoxidkonzentration von 2.82 eq/kg erreicht war. Nach dem Ende der Reaktion wurden dem Reaktionsgemisch zusätzlich 118.2 g flüsigen DGEBA-Epoxidharzes zugegeben.

### Herstellung Addukt Hexamethylendiisocyanat mit Dimethylamin AD1

Es wurden 50ml Tetrahydrofuran und 20.0g einer ca. 33%igen Dimethylaminlösung in Ethanol (ca. 146 mmol Amin) in einen 100ml Zweihalskolben mit Rückflusskühler eingewogen. Anschliessend wurden während 30 Minuten langsam 10.0g Hexamethylen-disocyanat (ca. 119 mmol NCO) zugetropft, wobei eine leichte Exothermie beobachtet wurde und sofort ein weisser Festkörper ausfiel. Nach 2 Stunden Rühren bei Umgebungstemperatur wurde die Suspension filtriert. Es wurde 3x mit jeweils 20ml THF gewaschen. Das erhaltene Rohprodukt wurde 3h bei 80°C unter Vakuum getrocknet. Es wurden 12.3g eines weissen Pulvers erhalten.

### Herstellung Addukt AD2

22.97 g (0.22 mol) Diethylentriamin wird unter Rühren zu 102.6 g (0.68 mol) Salicylsäure-methylester getropft. Diese Mischung wird bei ca. 140°C während 6 h gerührt, wobei sich eine weisse Fällung bildet. Nach dem Abkühlen auf 30°C wird Aceton zugegeben und die weisse Fällung wird abfiltriert. Der Rückstand wird zwei Mal mit Aceton gewaschen und anschliessend im Vakuumofen bei 60°C getrocknet. Dabei wird ein Zwischenprodukt mit einem Schmelzpunkt von ca. 150°C erhalten. Dieses wird danach im Trockenschrank unter Vakuum während 90 Minuten auf 160°C erhitzt. Das Rohprodukt wird fein gemörsert und noch einmal eine Stunde bei 160°C unter Vakuum behandelt. So wurden ca. 47 g eines weissen Pulvers mit einem Schmelzpunkt von ca. 290°C erhalten.

### Herstellung der Zusammensetzungen

Es wurden gemäss Tabellen 2 bis 5 die Referenzzusammensetzungen ***Ref.1 - Ref. 13*** sowie die erfindungsgemässen Zusammensetzungen ***1*** bis ***10*** hergestellt. Die Bestandteile sind jeweils in Gewichtsteilen angegeben. Insbesondere wurde darauf geachtet, dass die Zusammensetzungen jeweils dieselben Mengen an Epoxidgruppen wie das entsprechende Referenzbeispiel aufweisen. Bei den Vergleichsbeispielen, welche nicht umgesetztes amphiphiles Blockcopolymer (Fortegra^{™} 100), bzw. Polyol (Acclaim 8200N), enthalten, wurde für die entsprechenden erfindungsgemässen Beispiele die Menge des jeweiligen erfindungsgemässen Schlagzähigkeitsmodifikators so ausgewählt, dass sie die gleiche Menge an amphiphiles Blockcopolymer als Ausgangsprodukt enthalten.

### Prüfmethoden:

### Zugscherfestigkeit (ZSF) (DIN EN 1465)

Die Probekörper wurden aus den beschriebenen Beispiel-Zusammensetzungen und mit elektrolytisch verzinktem DC04 Stahl (eloZn) mit dem Mass 100 x 25 x 1.5 mm bzw. 100 x 25 x 0.8 mm, hergestellt, dabei betrug die Klebfläche 25 x 10mm bei einer Schichtdicke von 0.3mm. Gehärtet wurde 30 Min. bei 180°C. Die Zuggeschwindigkeit betrug 10mm/min.

### Zugfestigkeit (ZF) (DIN EN ISO 527)

Eine Klebstoffprobe wurde zwischen zwei Teflonpapieren auf eine Schichtdicke von 2mm verpresst.Anschliessend wurde der Klebstoff während 30 Minuten bei 180°C gehärtet. Die Teflonpapiere wurden entfernt und die Probekörper nach DIN-Norm wurden im heissen Zustand ausgestanzt.Die Prüfkörper wurden nach 1 Tag Lagerung unter Normklima mit einer Zuggeschwindigkeit von 2 mm/min gemessen. Die Zugfestigkeit wurde gemäss DIN EN ISO 527 bestimmt.

### Schlagschälarbeit (ISO 11343)

Die Probekörper wurden aus den beschriebenen Beispiel-Zusammensetzungen und mit elektrolytisch verzinktem DC04 Stahl (eloZn) mit dem Mass 90 x 20 x 0.8mm hergestellt, dabei betrug die Klebfläche 20 x 30mm bei einer Schichtdicke von 0.3mm. Gehärtet wurde 30 Min. bei 180°C. Die Messung der Schlagschälarbeit erfolgte jeweils bei Raumtemperatur und bei minus 30°C. Die Schlaggeschwindigkeit betrug 2 m/s. Als Bruchenergie (BE) in Joule wird die Fläche unter der Messkurve (von 25% bis 90%, gemäss ISO 11343) angegeben.

### Glasübergangstemperatur (T_{g})

Die Glasübergangstemperatur wurde mittels DSC bestimmt. Es wurde hierfür ein Gerät Mettler DSC822^{e} verwendet. 10 - 20 mg der Zusammensetzungen wurden jeweils in einen Aluminiumtiegel eingewogen. Nachdem die Probe im DSC während 30 Min. bei 175°C gehärtet worden war, wurde die Probe auf minus 20°C abgekühlt und anschliessend mit einer Heizrate von 10°C/min bis 150°C aufgeheizt. Die Glasübergangstemperatur wurde mit Hilfe der DSC-Software aus der gemessenen DSC-Kurve bestimmt.
Die Ergebnisse dieser Prüfungen sind in Tabellen 2 bis 5 zusammengestellt.

**Tabelle 2. Zusammensetzungen und Ergebnisse. ¹BE = Bruchenergie.**

| | ***1*** | ***Ref.1*** | ***Ref.2*** | ***2*** | ***Ref.3*** | ***Ref.4*** |
|---|---|---|---|---|---|---|
| D.E.R.^{™} 331 | 45.0 | 45.0 | 45.0 | 42.0 | 42.0 | 42.0 |
| Polypox R7 | 3.0 | 3.0 | 3.0 | 3.0 | 3.0 | 3.0 |
| ***PU2-1*** | 16.5 | | | | | |
| ***PU2-2*** | | | | 18.0 | | |
| Fortegra^{™} 100 | | 15.0 | | | | |
| ***PU-Ref1*** | | | 16.5 | | | |
| ***PU-Ref2*** | | | | | 18.0 | |
| Acclaim 8200 N | | | | | | 15.0 |
| *dicy* | 3.74 | 3.74 | 3.74 | 3.82 | 3.82 | 3.82 |
| N,N-Dimethylharnstofif | 0.2 | 0.2 | 0.2 | 0.2 | 0.2 | 0.2 |
| Füllstofifgemisch | 19.0 | 19.0 | 19.0 | 19.0 | 19.0 | 19.0 |
| ZSF [MPa] | 22.0 | 12.0 | 6.4 | 17.9 | 9.9 | 8.1 |
| BE¹ bei 23°C [J] | 9.6 | 0.3 | 1.6 | 5.1 | 1.6 | 0.2 |
| BE¹ bei -30°C [J] | 8.4 | 0.1 | 1.4 | 4.9 | 1.5 | 0.2 |
| Tg [°C] | 129 | 128 | 127 | 126 | 132 | 131 |

**Tabelle 3. Zusammensetzungen und Ergebnisse. ¹BE = Bruchenergie.**

| | ***3*** | ***Ref.5*** | ***4*** | ***Ref.6*** | ***5*** | ***Ref.7*** | ***6*** | ***Ref.8*** |
|---|---|---|---|---|---|---|---|---|
| D.E.R.^{™} 331 | 45.0 | 45.0 | 45.0 | 45.0 | 48.0 | 50.0 | 30.0 | 30.0 |
| Polypox R7 | 3.0 | 3.0 | 3.0 | 3.0 | 3.0 | 3.0 | 3.0 | 3.0 |
| ***PU2-1*** | 8.0 | | 8.0 | | | | | |
| ***PU2-2*** | | | | | 8.5 | | 8.5 | |
| Fortegra^{™} 100 | | 7.0 | | 7.0 | | 7.0 | | 7.0 |
| ***PU-Ref3*** | | | | | 15.0 | 15.0 | | |
| Struktol 3614 | 15.0 | 15.0 | | | | | | |
| ***SM1*** | | | 15.0 | 15.0 | | | | |
| ***SM2*** | | | | | | | 30.0 | 30.0 |
| *dicy* | 4.41 | 4.41 | 4.41 | 4.41 | 4.14 | 4.14 | 4.09 | 4.09 |
| Füllstoffgemisch | 19.0 | 19.0 | 19.0 | 19.0 | 19.0 | 19.0 | 19.0 | 19.0 |

**Tabelle 3(cont.). Zusammensetzungen und Ergebnisse. ¹BE = Bruchenergie.**

| | ***3*** | ***Ref.5*** | ***4*** | ***Ref.6*** | ***5*** | ***Ref.7*** | ***6*** | ***Ref.8*** |
|---|---|---|---|---|---|---|---|---|
| ZF [MPa] | 43.1 | 32.3 | 33.1 | 32.0 | 30.1 | 17.0 | 37.4 | 31.8 |
| ZSF [MPa] | 35.8 | 22.5 | 33.8 | 17.1 | 31.0 | 24.2 | 33.0 | 31.7 |
| BE¹ bei 23°C [J] | 8.6 | 0.2 | 8.8 | 0.2 | 9.9 | 4.9 | 8.1 | 4.2 |
| BE¹ bei -30°C [J] | 2.0 | 0.1 | 2.0 | 0.2 | 4.8 | 1.5 | 4.7 | 0.3 |
| Tg [°C] | 128 | 130 | 130 | 132 | 110 | 109 | 130 | 130 |

**Tabelle 4. Zusammensetzungen und Ergebnisse. ¹BE = Bruchenergie.**

| | ***7*** | ***Ref.9*** | ***8*** | ***Ref.10*** | ***9*** | ***Ref.11*** |
|---|---|---|---|---|---|---|
| D.E.R.^{™} 331 | 45.0 | 45.0 | 43.0 | 45.0 | 44.0 | 45.0 |
| Polypox R7 | 3.0 | 3.0 | 3.0 | 3.0 | 3.0 | 3.0 |
| ***PU2-1*** | | | 9.0 | | 6.0 | |
| ***PU2-2*** | | | 9.0 | | 6.0 | |
| ***PU2-3*** | 24.0 | | | | | |
| Fortegra^{™} 100 | | 7.0 | | 15.0 | | 10.0 |
| ***PU-Ref4*** | | 15.0 | | | | |
| ***SM3*** | | | 10.0 | 10.0 | | |
| ***SM4*** | | | | | 10.0 | 10.0 |
| ***TM1*** | | | | | 10.0 | 10.0 |
| *dicy* | 4.41 | 4.41 | 3.91 | 3.91 | 4.08 | 4.08 |
| N,N-Dimethylharnstofif | | | 0.2 | 0.2 | | |
| ***AD1*** | 0.2 | 0.2 | | | 0.2 | 0.2 |
| Füllstofifgemisch | 19.0 | 19.0 | 19.0 | 19.0 | 19.0 | 19.0 |
| ZSF [MPa] | 31.3 | 21.9 | 19.1 | 8.0 | 24.1 | 9.8 |
| BE¹ bei 23°C [J] | 11.5 | 5.2 | 6.6 | 0.2 | 7.7 | 0.4 |
| BE¹ bei -30°C [J] | 9.2 | 2.8 | 7.1 | 0.2 | 7.0 | 0.2 |
| Tg [°C] | 117 | 121 | 129 | 130 | 119 | 120 |

**Tabelle 5. Zusammensetzungen und Ergebnisse. ¹BE = Bruchenergie**

| | ***10*** | ***Ref.12*** | ***Ref.13*** |
|---|---|---|---|
| D.E.R.^{™} 331 (DGEBF) (Dow) | 40.0 | 40.0 | 40.0 |
| D.E.R.^{™}354 (DGEBF) (Dow) | 2.0 | 2.0 | 2.0 |
| Araldite GT7071 ("Typ-1" Epoxid-Festharz) (Dow) | 2.0 | 2.0 | 2.0 |
| D.E.N. 431 (Novolak) (Dow) | 2.0 | 2.0 | 2.0 |
| Cardura E10 P (Hexion) | 1.0 | 1.0 | 1.0 |
| Cardolite ® LITE 2513 HP (Cardolite)) | 1.0 | 1.0 | 1.0 |
| Epikote 493 (Hexion) | 1.0 | 1.0 | 1.0 |
| ***PU2-1*** | 3.5 | | |
| ***PU2-2*** | 3.5 | | |
| Fortegra^{™} 100 | | 6.0 | |
| ***PU-Ref3*** | 2.0 | 2.0 | 2.0 |
| ***PU-Ref4*** | 2.0 | 2.0 | 2.0 |
| ***PU-Ref5*** | 2.0 | 2.0 | 2.0 |
| **S*M1*** | 2.0 | 2.0 | 2.0 |
| ***SM2*** | 2.0 | 2.0 | 2.0 |
| ***SM3*** | 2.0 | 2.0 | 2.0 |
| ***SM4*** | 2.0 | 2.0 | 2.0 |
| ***SM5*** | 2.0 | 2.0 | 2.0 |
| Struktol® 3614 (Schill&Seilacher) | 2.0 | 2.0 | 2.0 |
| Flexiblizer DY 965 (Huntsman) | 2.0 | 2.0 | 2.0 |
| Adeka EP-49-10N (Asahi Denka Kogyo K.K) | 2.0 | 2.0 | 2.0 |
| F-351^{™} (Core-Shell)(Nippon Zeon Chemicals) | 1.0 | 1.0 | 1.0 |
| Kane ACE MX-120 (Kaneka) | 1.0 | 1.0 | 1.0 |
| Eliokem NEP (Eliokem) | 1.0 | 1.0 | 1.0 |
| Nanpox ® XP 220516 (Nanoresins) | 1.0 | 1.0 | 1.0 |
| MagSilica ® 50 (Evonik) | 0.2 | 0.2 | 0.2 |
| *dicy* | 4.9 | 4.9 | 4.9 |
| N,N-Dimethylharnstofif | 0.1 | 0.1 | 0.1 |
| ***AD1*** | 0.1 | 0.1 | 0.1 |
| ***AD2*** | 0.1 | 0.1 | 0.1 |
| Omicure ® BC-120 (CVC Specialty Chemicals) | 0.1 | 0.1 | 0.1 |

**Tabelle 5 (cont.). Zusammensetzungen und Ergebnisse. ¹BE = Bruchenergie**

| | ***10*** | ***Ref.12*** | ***Ref.13*** |
|---|---|---|---|
| Jayflex DIDP (Weichmacher) (Exxon Mobile Chemicals) | 1.0 | 1.0 | 1.0 |
| Mesamoll® II (Weichmacher) (Lanxess) | 1.0 | 1.0 | 1.0 |
| Wingstay® T(Stabilisator) (Eliokem) | 0.5 | 0.5 | 0.5 |
| Surfinol® 420 (Tensid)(Air Products) | 0.1 | 0.1 | 0.1 |
| EFKA® 2720 (Entschäumer)(Ciba Speciality Chemicals) | 0.1 | 0.1 | 0.1 |
| Silquest® A-187 (Haftvermittler) (GE Advanced Materials) | 0.1 | 0.1 | 0.1 |
| ***TM1*** | 2.0 | 2.0 | 2.0 |
| Luvothix®HT (Thixotropiermittel) (Lehmann&Voss) | 1.0 | 1.0 | 1.0 |
| Dynacoll® 7330 (Evonik) | 1.0 | 1.0 | 1.0 |
| Disperal ® 40 (nanoskaliges Alumoxan) (Sasol) | 2.0 | 2.0 | 2.0 |
| Calciumoxid | 2.0 | 2.0 | 2.0 |
| Aerosil® R202 (Evonik) | 4.0 | 4.0 | 4.0 |
| Wollastonit | 2.0 | 2.0 | 2.0 |
| Kreide | 2.0 | 2.0 | 2.0 |
| Talk | 0.5 | 0.5 | 0.5 |
| Glimmer | 0.5 | 0.5 | 0.5 |
| Garamite® 1958 (Rockwood Specialties) | 0.5 | 0.5 | 0.5 |
| Chromophtal-Rot (Ciba Speciality Chemicals) | 0.1 | 0.1 | 0.1 |
| Russ | 0.1 | 0.1 | 0.1 |
| ZSF [MPa] | 26.3 | 13.8 | 30.1 |
| BE¹ bei 23°C [J] | 7.2 | 0.9 | 5.6 |
| BE¹ bei -30°C [J] | 2.9 | 0.3 | 0.9 |
| Tg [°C] | 104 | 108 | 106 |

## Patentansprüche

1. Schlagzähigkeitsmodifikator, welcher ein Isocyanatgruppen aufweisendes Polyurethan-Polymer **(PU1),** welches hergestellt wird aus mindestens einem Polyisocyanat und mindestens einem amphiphilen Blockcopolymer, welches mindestens eine Hydroxylgruppe aufweist, und gegebenenfalls mindestens einer Verbindung mit mindestens zwei NCO-reaktiven Gruppen; oder ein Umsetzungsprodukt **(PU2)** dieses Polyurethanproduktes **(PU1)** mit mindestens einer NCO-reaktiven Verbindung ist.

2. Schlagzähigkeitsmodifikator gemäss Anspruch 1, **dadurch gekennzeichnet, dass** das mindestens eine Hydroxylgruppe aufweisende amphiphile Blockcopolymer ein Blockcopolymer aus Ethylenoxid und/oder Propylenoxid sowie mindestens einem weiteren Alkylenoxid mit mindestens 4C-Atomen, bevorzugt aus der Gruppe bestehend aus Butylenoxid, Hexylenoxid und Dodecylenoxid.

3. Schlagzähigkeitsmodifikator gemäss Anspruch 1, **dadurch gekennzeichnet, dass** das das mindestens eine Hydroxylgruppe aufweisende amphiphile Blockcopolymer ausgewählt ist aus der Gruppe bestehend aus Poly(isopren-block-ethylenoxid)-Blockcopolymere, Poly(ethylen propylen-b-ethylenoxid)-Blockcopolymere, Poly(butadien-b-ethylenoxid)-Blockcopolymere, Poly(isopren-b-ethylenoxid-b-isopren)-Blockcopolymere, Poly(isopren-b-ethylenoxid-methylmethacrylat)-Blockcopolymere und Poly(ethylenoxid)-b-poly(ethylen-alt propylen)-Blockcopolymere.

4. Schlagzähigkeitsmodifikator gemäss einem der vorhergehenden Ansprüche, **dadurch gekennzeichnet, dass** für die Herstellung des Polyurethanprepolymers **PU1** zusätzlich zum mindestens einem amphiphilen Blockcopolymer, welches mindestens eine Hydroxylgruppe aufweist, noch mindestens ein Polymer **Q_{PM}** mit endständigen Amino-, Thiol- oder Hydroxylgruppen; und / oder mindestens ein, gegebenenfalls substituiertes, Polyphenol **Q_{PP}** verwendet wird.

5. Schlagzähigkeitsmodifikator gemäss Anspruch 4, **dadurch gekennzeichnet, dass** das Polymer **Q_{PM}** ein α,ω- Dihydroxypolyalkylenglykol mit C₂-C₆-Alkylengruppen oder mit gemischten C₂-C₆-Alkylengruppen ist, welches mit Amino-, Thiol- oder, bevorzugt, Hydroxylgruppen terminiert ist.

6. Schlagzähigkeitsmodifikator gemäss Anspruch 4 oder 5, **dadurch gekennzeichnet, dass** das Polymer **Q_{PM}** ein Equivalenzgewicht von 300-6'000 g/Equivalent NCO-reaktiver Gruppen, insbesondere von 700 - 2200 g/NCO-reaktiver Gruppen, aufweist.

7. Schlagzähigkeitsmodifikator gemäss einem der Ansprüche 4 bis 6,
**dadurch gekennzeichnet, dass** das für die Herstellung des Polyurethanprepolymers **PU1** eingesetzte Polyisocyanat, insbesondere ein Diisocyanat oder Triisocyanat, bevorzugt HDI, IPDI, MDI oder TDI, ist.

8. Schlagzähigkeitsmodifikator gemäss einem der vorhergehenden Ansprüche, **dadurch gekennzeichnet, dass** er die Formel (I) aufweist 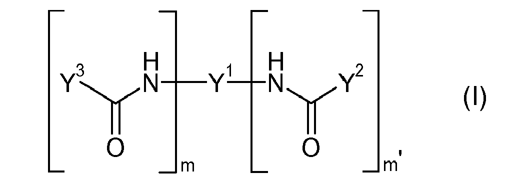 wobei Y¹ für ein mit m+m' Isocyanatgruppen terminiertes lineares oder verzweigtes Polyurethanpolymer **PU1** nach dem Entfernen aller endständigen Isocyanatgruppen steht; Y² unabhängig von einander für eine Blockierungsgruppe, welche sich bei einer Temperatur über 100°C abspaltet, steht; Y³ unabhängig von einander für eine Gruppe der Formel (I') steht 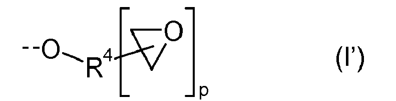 wobei R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht; p = 1, 2 oder 3 und m und m' je für Werte zwischen 0 und 8 stehen, mit der Massgabe, dass m +m' für einen Wert von 1 bis 8 steht.

9. Schlagzähigkeitsmodifikator gemäss Anspruch 8, **dadurch gekennzeichnet, dass** Y² für einen Rest steht, welcher ausgewählt ist aus der Gruppe bestehend aus 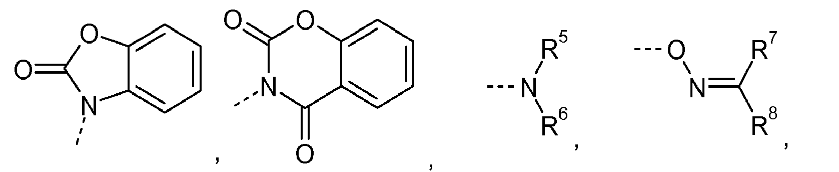 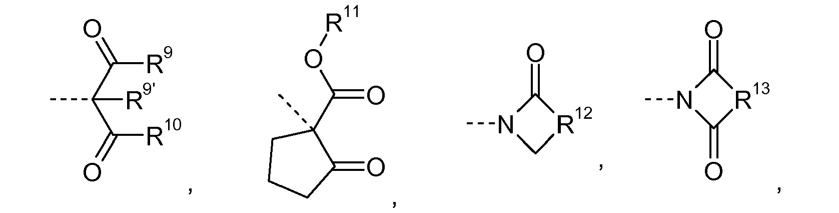 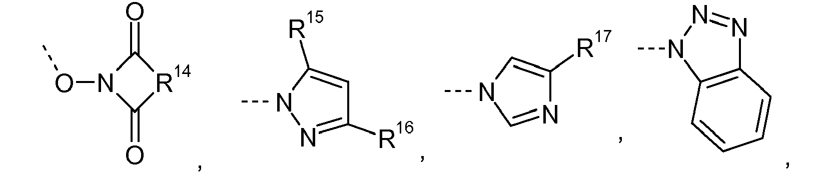 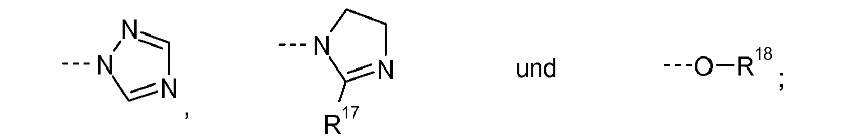 wobei R⁵, R⁶, R⁷ und R⁸ je unabhängig voneinander für eine Alkyl- oder Cycloalkyl- oder Aryl- oder Aralkyl- oder Arylalkyl-Gruppe steht oder R⁵ zusammen mit R⁶, oder R⁷ zusammen mit R⁸, einen Teil eines 4- bis 7- gliedrigen Rings bilden, welcher allenfalls substituiert ist; R⁹, R^{9'} und R¹⁰ je unabhängig voneinander für eine Alkyl- oder Aralkyl- oder Aryl- oder Arylalkyl-Gruppe oder für eine Alkyloxy- oder Aryloxy-oder Aralkyloxy-Gruppe steht; R¹¹ für eine Alkylgruppe steht, R¹², R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen; R¹⁵, R¹⁶ und R¹⁷ je unabhängig voneinander für H oder für eine Alkylgruppe oder für eine Arylgruppe oder eine Aralkylgruppe stehen; und R¹⁸ für eine Aralkylgruppe oder für eine ein- oder mehrkernige substituierte oder unsubstituierte Aromatengruppe steht, welche gegebenenfalls aromatische Hydroxylgruppen aufweist.

10. Schlagzähigkeitsmodifikator gemäss Anspruch 7 oder 8, **dadurch gekennzeichnet, dass** Y² ausgewählt ist aus der Gruppe bestehend aus 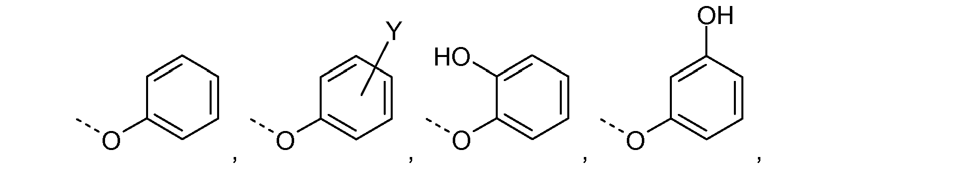 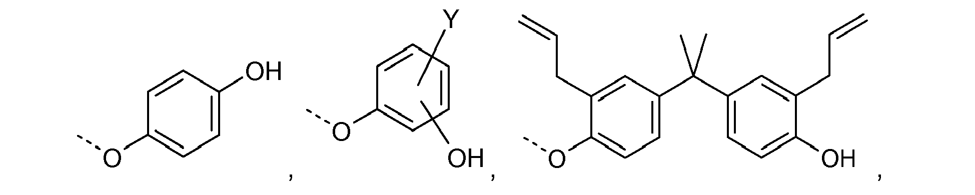 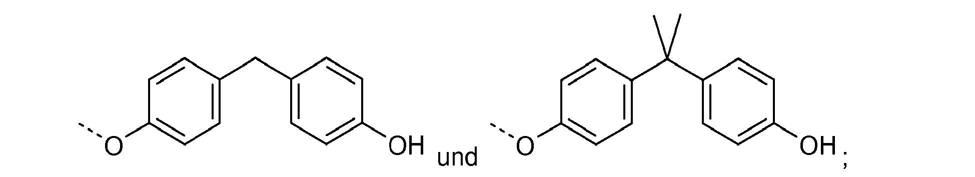 wobei Y für einen gesättigten oder olefinisch ungesättigten Kohlenwasserstoffrest mit 1 bis 20 C-Atomen, insbesondere mit 1 bis 15 C-Atomen, steht.

11. Schlagzähigkeitsmodifikator gemäss einem der Ansprüche 7 bis 10,
**dadurch gekennzeichnet, dass** das R⁴ ein dreiwertiger Rest der Formel 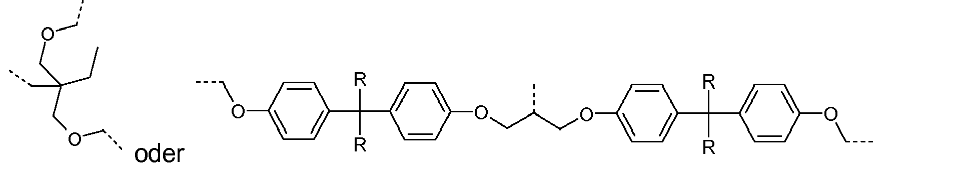 ist, wobei R Methyl oder H ist.

12. Einkomponentige hitzehärtende Epoxidharzzusammensetzung enthaltend
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird;
- mindestens ein Schlagzähigkeitsmodifikator gemäss einem der Ansprüche 1 - 11.

13. Einkomponentige hitzehärtende Epoxidharzzusammensetzung gemäss Anspruch 12, **dadurch gekennzeichnet, dass** der Härter **B** ein Härter ist, welcher ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), N,N-Dimethylharnstoff sowie Imidazole, Imidazol-Salze und Amin-Komplexe.

14. Einkomponentige hitzehärtende Epoxidharzzusammensetzung gemäss Anspruch 12 oder 13, **dadurch gekennzeichnet, dass** sie zusätzlich mindestens einen weiteren Schlagzähigkeitsmodifikator **D** enthält.

15. Verfahren zur Verklebung von hitzestabilen Substraten umfassend die Schritte
i) Applizieren einer einkomponentigen hitzehärtenden Epoxidharzzusammensetzung gemäss einem der Ansprüche 12 bis 14 auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen des Epoxidharzzusammensetzung auf eine Temperatur von 100 bis 130 °C, bevorzugt von 115 bis 125°C;
iv) In Kontaktbringen der Substrate **S1** und **S2** und der damit in Kontakt stehenden hitzehärtenden Epoxidharzzusammensetzung mit einer Waschflüssigkeit bei einer Temperatur zwischen 20 und 100°C, insbesondere zwischen 40 und 70°C; bevorzugt zwischen 50 und 70°C
v) Erhitzen der Zusammensetzung auf eine Temperatur von 140 - 220 °C, insbesondere von 140 - 200°C, bevorzugt zwischen 160 und 190°C;.0
wobei das Substrat **S2** aus dem gleichen oder einem unterschiedlichen Material wie das Substrat **S1** besteht.

16. Verwendung einer einkomponentigen hitzehärtenden Epoxidharzzusammensetzung gemäss einem der Ansprüche gemäss einem der Ansprüche 12 bis 14 als hitzehärtender einkomponentiger Rohbauklebstoff im Fahrzeugbau.

17. Verwendung eines mindestens eine Hydroxylgruppe aufweisenden amphiphilen Blockcopolymeren, zum Herstellen von Urethangruppen aufweisenden Schlagzähigkeitsmodifikatoren.

18. Verwendung gemäss Anspruch 17, **dadurch gekennzeichnet, dass** der Schlagzähigkeitsmodifikator ein Schlagzähigkeitsmodifikator gemäss einem der Ansprüche 1 - 11 ist.
